# EUROPÄISCHE PATENTSCHRIFT

(11) **EP 3 341 308 B1**
(45) Veröffentlichungstag und Bekanntmachung des Hinweises auf die Patenterteilung: **11.03.2020**
(21) Anmeldenummer: 16757194.2
(22) Anmeldetag: 16.08.2016
(51) Int. Cl.: B65G 1/137, G06Q 10/08

(54) **LAGER- UND KOMMISSIONIERSYSTEM**
STORAGE AND PICKING SYSTEM
SYSTÈME D'ENTREPOSAGE ET DE PRÉPARATION DE COMMANDES

(30) Priorität: 28.08.2015 DE 102015114393
(43) Veröffentlichungstag der Anmeldung: 04.07.2018
(73) Patentinhaber: SSI Schäfer Automation GmbH (DE), 97232 Giebelstadt (DE)
(72) Erfinder: ISSING, Elmar, 97232 Giebelstadt (DE)
(74) Vertreter: Witte, Weller & Partner Patentanwälte mbB
(86) Internationale Anmeldenummer: PCT/EP2016/069382
(87) Internationale Veröffentlichungsnummer: WO 2017/036780

(56) Entgegenhaltungen:
- EP-A1- 1 761 444
- EP-A2- 0 302 205
- WO-A1-2015/035300
- WO-A1-2015/097736
- DE-A1-102008 039 764
- DE-A1-102013 106 640
- JP-A- S6 283 903
- JP-A- 2002 205 803
- US-A1- 2008 167 884
- US-A1- 2013 103 552
- US-A1- 2014 100 999
- US-A1- 2014 288 696
- US-B1- 8 965 562
- Gudehus T.: "Logistik 2" In: "Logistik 2", 30. Juni 2012 (2012-06-30), Springer Vieweg, XP055324468, ISBN: 978-3-642-29376-4 Seiten 641-643, Seite 642; Abbildung 16.9
- Scaglia Indeva Spa: "INDEVA AGV Automatic Guided Vehicles", , 31. Juli 2015 (2015-07-31), Seiten 1-12, XP055324824, Gefunden im Internet: URL:http://www.indevagroup.com/wp-content/ uploads/2015/10/agv-indeva-low_UK.pdf [gefunden am 2016-11-30]

## Beschreibung

Die vorliegende Erfindung betrifft ein Verfahren zum Betreiben eines Lager- und Kommissioniersystems sowie das Lager- und Kommissioniersystem selbst. Die Erfindung arbeitet allgemein nach dem Mann-zur-Ware-Prinzip.

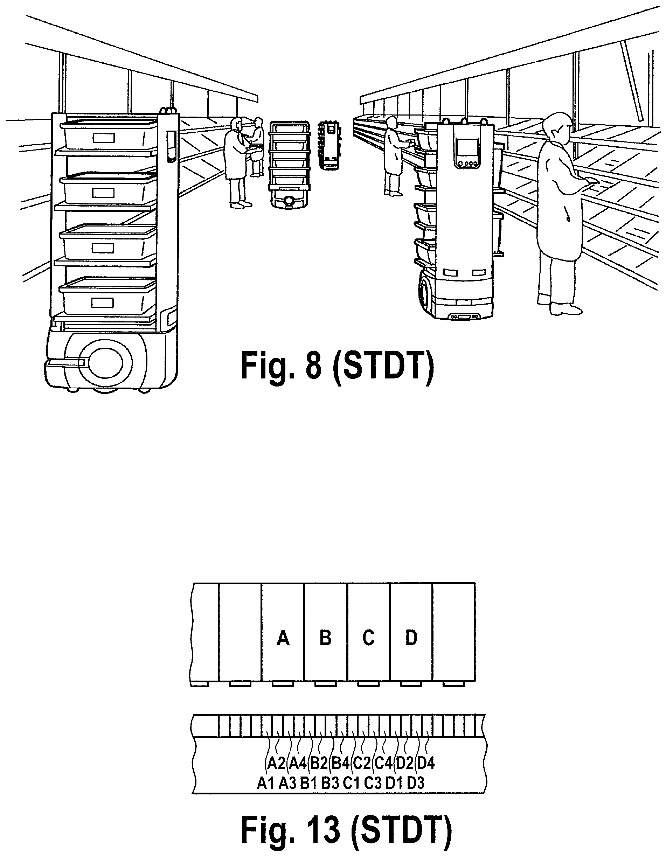

Das Dokument WO 2015/035300 A1 offenbart ein Kommissionierverfahren und ein Kommissioniersystem in einem Verteilzentrum. Zum artikel- und/oder auftragsorientierten Einsammeln von Stückgütern und/oder Gebinden bzw. Verpackungseinheiten (VPE, d.h. Cases) werden autonom verfahrbare Fahrzeuge zum Transport von aus einem Lager entnommenen Stückgütern, Gebinden und/oder Ladehilfsmitteln (nachfolgend als "Ware" bezeichnet) eingesetzt. Es wird nach dem Mann-zur-Ware-Prinzip kommissioniert. Der Transport der Waren erfolgt im Wesentlichen mittels der autonom verfahrbaren Fahrzeuge (siehe Fig. 8). Eine Entnahme und Abgabe der Waren (zumindest in einer ersten Kommissionierstufe) erfolgt vorzugsweise manuell. Dies bedeutet, dass die Waren von einem Menschen gegriffen und an eines oder mehrere der autonom verfahrbaren Fahrzeuge abgegeben werden. Die Abgabe erfolgt artikelorientiert in der zweistufigen Kommissionierung und auftragsorientiert in der einstufigen Kommissionierung. Alternativ zum Menschen kann ein Greifroboter eingesetzt werden, der vorzugsweise auf der Basis der autonom verfahrbaren Fahrzeuge aufbaut. Beim einstufigen Kommissionieren transportieren die Fahrzeuge die eingesammelten Waren in einen Packbereich oder direkt in einen Versandbereich. Beim zweistufigen Kommissionieren transportieren die Fahrzeuge die eingesammelten Waren zu einer Sortiereinrichtung, wo die eingesammelten Waren auftragsorientiert auf Zielstellen verteilt werden.

Die WO 2015/035300 offenbart als Sortiereinrichtung eine Kombination aus einem "Pick- and-Place"-Roboter und einem Konsolidierungsregal mit einer Vielzahl von Regalfächern, die von gegenüberliegenden Seiten des Regals gefüllt und entleert werden. Eine erste Seite des Konsolidierungsregals wird mittels des Roboters auftragsorientiert befüllt. Dies bedeutet, dass jedem Regalfach ein Auftrag zugeordnet ist. Die gegenüberliegende Seite des Regals wird manuell entleert, sobald alle Waren Auftrags in das entsprechende Regalfach gelegt wurden. Die aus dem Regalfach entnommenen Waren werden manuell in einen Zielbehälter gegeben, der bereits durch einen Versandbehälter realisiert sein kann.

Die autonom verfahrbaren Fahrzeuge der WO 2015/035300 sind selbst navigierend und bewegen sich somit ohne Zwangsführung durch das System. Bei einer einstufigen Kommissionierung kann es passieren, dass der Auftrag, das heißt das Fahrzeug und der Kommissionierer, durch das gesamte System bewegt werden muss, um alle Waren des Auftrags einzusammeln. Dies bedeutet, dass das Fahrzeug lange Wege zurücklegen muss und somit viel Zeit zur Abarbeitung des Auftrags benötigt. Bei der zweistufigen Kommissionierung ist es erforderlich, eine separate Sortiereinrichtung vorzusehen, die die eingesammelten Waren auftragsorientiert verteilt. Die Sortiereinrichtung ist teuer. Der Sortiervorgang erfordert Zeit. Der Sortiervorgang erfordert einen Steuerungs- und Kontrollaufwand.

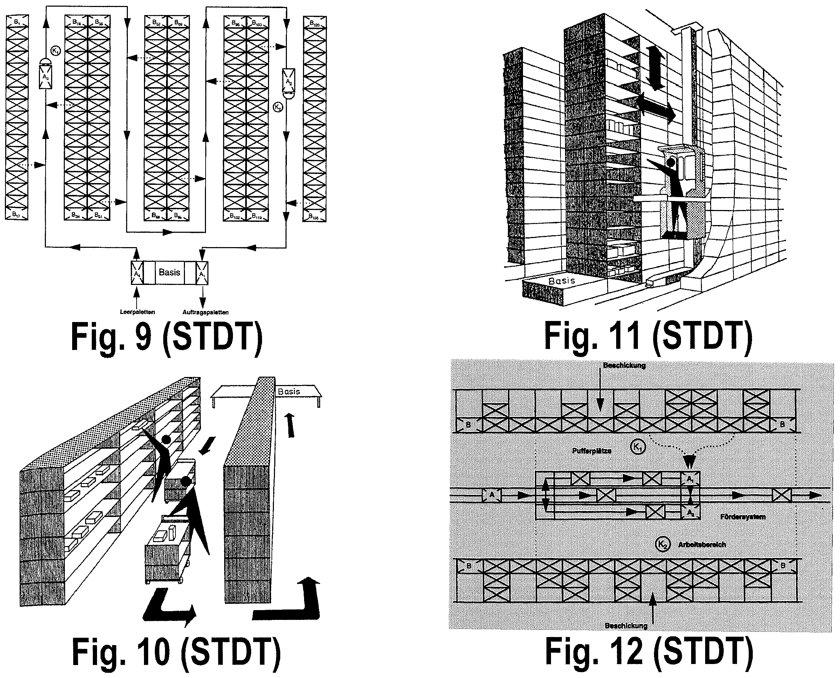

Des Weiteren.sind klassisch Kommissionierverfahren bekannt, bei denen die Waren statisch bereitgestellt werden, wobei ebenfalls nach dem Mann-zur-Ware-Prinzip kommissioniert wird. Derartige Kommissionierverfahren sind in dem Buch "Logistik" von Timm Gudehus (ISBN 3-540-65206-X) beschrieben und in den Figuren 9 bis 12 gezeigt, die aus diesem Buch stammen.

Die Fig. 9 bis 11 zeigen jeweils ein Kommissioniersystem mit statischer Bereitstellung der Waren in Regalen. Der Kommissionierer entnimmt die Waren aus den Regalen und gibt sie an einen mitgeführten Zielbehälter (z.B. Palette oder Sammelbehälter) ab, während sich der Kommissionierer mäanderartig durch das gesamte Lager bewegt. Der Kommissionierer läuft entweder durch die Regalgassen (Fig. 10) oder fährt auf einem Regalbediengerät durch die Gassen (Fig. 11), während er das oder die Zielbehälter mit sich führt. Ein Nachteil dieser Kommissionierverfahren ist darin zu sehen, dass die Kommissionierer lange Wege zurücklegen müssen, um alle Waren eines Auftrags einzusammeln. Mit anderen Worten bedeutet dies, dass eine (Transfer-)Aktionsdichte (Entnahmen und Abgaben pro Laufmeter des Kommissionierers) in der Regel äußerst gering ist. Die Kommissionierleistung (Anzahl fertiggestellter Aufträge pro Zeiteinheit) ist gering. Derartige Kommissionierverfahren sind nicht für E-Commerce-Anwendungen geeignet, weil E-Commerce-Anwendungen eine besondere Auftragsstruktur aufweisen. Die Auftragsstruktur bei E-Commerce-Anwendungen zeichnet sich dadurch aus, dass die Aufträge üblicherweise wenige Auftragszeilen (Warentypen) mit geringen Mengen (jeweilige Anzahl von Typen) aufweisen.

Ferner ist ein Kommissionierverfahren (Zonen-Picking) bekannt, das nach dem Mann-zur-Ware-Prinzip arbeitet, wobei die Waren wiederum statisch bereitgestellt sind, der Kommissionierer sich aber innerhalb einer begrenzten Zone bewegt, wie es in Fig. 12 dargestellt ist. Die Fig. 12 zeigt ein System, bei der sich eine Fördertechnik (d.h. ein Stetigförderer) vorzugsweise innerhalb einer Regalgasse zwischen zwei benachbart angeordneten Regalen befindet. Seitlich parallel zur zentralen Fördertechnik erstrecken sich sogenannte "Fördertechnik-Schleifen", wo Zielbehälter (Auftragsbehälter) ausgeschleust werden, um vom Kommissionierer mit Waren bestückt zu werden, die der Kommissionierer aus den Regalen gemäß den Kommissionieraufträgen entnimmt, wobei ein Kommissionierauftrag auf mehrere Zonen und/oder Auftragsbehälter aufgeteilt werden kann. Bei diesem Verfahren besteht das Problem, dass die Kommissionierer innerhalb ihrer fest zugewiesenen Zonen nicht immer optimal hinsichtlich eines Arbeitsaufkommens ausgelastet sind. In Spitzenzeiten ist es möglich, dass der Kommissionierer überlastet ist, das heißt, die zu transferierenden Waren innerhalb seiner Zone nicht schnell genug in die Auftragsbehälter geben kann, weil der Kommissionierer zu viele Waren transferieren muss. Dieses Problem kann gelöst werden, indem man eine Anzahl der Kommissionierer, die innerhalb dieser Zone arbeiten, erhöht. Dadurch steigen aber die Personalkosten. Ferner besteht dann das Problem, dass zu Zeiten einer geringen Auslastung des Systems zu viele Kommissionierer vorhanden sind. Dies bedeutet wiederum, dass die jeweiligen Kommissionierer (wirtschaftlich) nicht effizient arbeiten, weil sie zu wenige Waren pro Zeiteinheit transferieren müssen.

Ein weiteres Problem bei der oben erwähnten (mehrstufigen und/oder mehrzonigen) "Schleifenkommissionierung" ist darin zu sehen, dass die Zielbehälter nur schwer oder gar nicht sequenziert und sortiert werden können. Unter einer Sequenzierung wird in diesem Zusammenhang verstanden, dass die Auftragsbehälter in einer vorgegebenen Reihenfolge an einem Zielpunkt ankommen. Unter einer Sortierung wird hier verstanden, dass die Auftragsbehälter am richtigen Zielpunkt von einer Vielzahl von möglichen Zielpunkten ankommen. Um die Sortierung erfolgreich durchzuführen, muss wiederum eine Sortiereinrichtung (z.B. umlaufender Kippschalensorter o.Ä.) zusätzlich vorgesehen werden. Die Sequenzierungsmöglichkeiten sind extrem eingeschränkt und bei diesem Beispiel nur über ein Ein- und Ausschleusen in die Fördertechnikschleifen möglich.

Eine Weiterentwicklung der klassischen mehrzonigen Kommissionierung ist in der US 2002/008723 A1 offenbart. Die US 2002/008723 A1 offenbart ebenfalls eine zentral zwischen Regalen in einer Regalgasse angeordnete Fördertechnik in Form eines Bandförderers. Die Waren werden manuell aus den Lagerregalfächern entnommen und manuell in Zwischen- bzw. Sammelbehälter abgegeben, die stationär oberhalb des Förderbands und entlang des Förderbands in einer großen Vielzahl angeordnet sind. Eine derartige Anordnung ist in der Fig. 13 gezeigt. Das Regal ist in mehrere Zonen (A, B, C und D) unterteilt. Jeder der Zonen ist eine gewisse Anzahl von Sammelbehältern (A1 - A4, ..., D1 - D4) und ein Kommissionierer zugeordnet. Es ist generell möglich, einen der Kommissionieraufträge auf mehrere der Zonen A - D zu verteilen. In diesem Fall wird in jeder der Zonen ein Teilauftrag abgearbeitet, wobei die Teilaufträge am Ende des Vorgangs zusammengeführt (sortiert) werden müssen. Die Abarbeitung eines Kommissionierauftrags kann also gleichzeitig in mehreren Zonen, das heißt parallel, erfolgen.

Um bei der US 2002/008723 A1 auf eine Sortiereinrichtung verzichten zu können, werden die in den Sammelbehältern befindlichen Teilaufträge koordiniert auf das zentral angeordnete Band abgeworfen. Das Band sammelt (sortiert) also zusammengehörende Teilaufträge, indem die entsprechenden Teilaufträge zum richtigen Zeitpunkt auf das Band abgeworfen werden, nämlich dann wenn ein dem Auftrag zugeordneter Bereich des Bands den bzw. die entsprechenden Sammelbehälter passiert. Deshalb kann es vorkommen, dass alle Sammelbehälter einer Zone belegt sind, obwohl der Kommissionierer, der in dieser Zone arbeitet, weitere Waren für andere Teilaufträge einsammeln könnte, aber die eingesammelten Waren dann nicht an einen freien Sammelbehälter abgeben kann. Betreibt man also das System ohne eine Sortiereinrichtung, verringert sich die Leistung (abgearbeitete Kommissionieraufträge pro Zeiteinheit). Dieses Problem ist nicht vorhanden, wenn man eine Sortiereinrichtung einsetzt, die die Teilaufträge auf die richtige Zielstelle (Auftrag) verteilt. Der Einsatz einer entsprechenden Sortiereinrichtung kostet aber Geld. Für die entsprechende Sortiereinrichtung wird ein entsprechender Raum innerhalb der Anlage benötigt. Die entsprechende Sortiereinrichtung ist häufig in Form eines endlos umlaufenden Förderers (z.B. Kippschalensorter) implementiert, an den eine Vielzahl von Zielstellen angekoppelt ist. Dieser endlos umlaufende Förderer weist aber wiederum eine endliche Kapazität auf, so dass es im Endeffekt wiederum zu einer Verringerung der Gesamtleistung kommt.

Ferner ist es wiederum nicht möglich, die Aufträge zu sequenzieren. So ist es z.B. nicht möglich, dass sich Aufträge überholen, weil die Aufträge seriell auf den zentralen Band eingesammelt werden. Eine Priorisierung eines Auftrags ist also nicht möglich. Unter einer Priorisierung wird nachfolgend ein Vorziehen eines jüngeren Auftrags gegenüber Aufträgen verstanden, die bereits in das System eingelastet sind.

Das Dokument US 2012/330458 A1 offenbart ein Verfahren zum Betreiben eines Lager- und Kommissioniersystems, in welchem eine Vielzahl von Menschen eine Vielzahl von Kommissionier-Aufträgen nach dem "Mann-zur-Ware"-Prinzip abarbeitet, wobei Menschen und Maschinen (Fahrzeuge) eingesetzt werden, wobei das System eine Bereitstellungszone, eine an die Bereitstellungszone angrenzende Kommissionierzone, eine Vielzahl von Bereitstellungseinheiten, ein FTS mit einer Vielzahl von FTF und eine Steuerung aufweist, wobei eine Vielzahl von mobilen Transferplätzen auf den FTF in der Kommissionierzone angeordnet sind und wobei das Verfahren aufweist: - Analysieren der Vielzahl von Kommissionier-Aufträgen durch die Steuerung zwecks Bestimmung von Entnahme-Orten in der Bereitstellungszone; - Festlegen von Transferaktionen, indem für jeden der Entnahme-Orte zumindest einer der mobilen Transferplätze in der Kommissionierzone als Abgabe-Ort in der Kommissionierzone ausgewählt und diesem Entnahme-Ort in der Bereitstellungszone zugeordnet wird, wobei der Abgabe-Ort innerhalb einer Aktionszone liegt, die sich um den jeweiligen Entnahme-Ort in der Bereitstellungszone erstreckt und die sich dynamisch mit dem jeweiligen Menschen bewegt, und wobei jede der Transferaktionen ferner eine Anzahl und einen Typen der Handhabungseinheiten definiert, die durch den jeweiligen Menschen zwischen einander zugeordneten Orten zu transferieren sind; - Erzeugen eines Aktionsauftrags für jeden der Menschen, indem: einige der Transferaktionen ausgewählt werden; und ein Bewegungsweg festgelegt wird, entlang dem sich der Mensch zwischen den ausgewählten Entnahme-Orten in der Bereitstellungszone durch die Kommissionierzone bewegt.

Das Dokument US 2013/317642 A1 offenbart Fahrzeuge, die Sammelbehälter von einer Kommissionierzone zur nächsten Kommissionierzone transportieren. Die Kommissionierer (Menschen) arbeitet immer nur in einer Zone und laufen nicht mit den Fahrzeugen zwischen verschiedenen Zonen mit. Die Fahrzeuge warten an vorbestimmten Punkten innerhalb jeder Zone, bis der Kommissionierer die zu kommissionierenden Gegenstände in den Behälter eingeladen hat, der auf dem Fahrzeug steht. Dann fährt das Fahrzeug weiter.

Es ist daher eine Aufgabe der vorliegenden Erfindung ein Lager- und Kommissioniersystem sowie ein Verfahren zum Betreiben desselben bereitzustellen, die generell nach dem Mann-zur-Ware-Prinzip arbeiten und die die oben erwähnten Ansätze verbessern. Insbesondere sollen Aufträge multiparallel abgearbeitet werden können. Vorzugsweise soll die Arbeitslastverteilung optimiert werden.

Diese Aufgabe wird gelöst durch ein Verfahren zum Betreiben eines Lager- und Kommissioniersystems gemäß Anspruch 1. Nachfolgend werden Vorteile der Erfindung und Unterschiede zu den eingangs beschriebenen vorbekannten Systemen und Verfahren beschrieben.

Eine Grunderkenntnis der vorliegenden Erfindung ist darin zu sehen, dass eine umgekehrte Dynamik angewendet wird. Bei der Erfindung werden bei der Kommissionierung die Zielstellen und bei der Einlagerung die Quellen dynamisch behandelt. Die FTF sorgen dafür, dass die Manipulatoren an ihren jeweiligen Standorten ihre jeweiligen Transaktionen unterbrechungsfrei ausführen können. Dies bedeutet, dass die Manipulatoren nicht auf ihre Zielstellen (z.B. Auftrags- oder Versandbehälter bei Kommissionierung) bzw. Quellen (Wareneingangsbehälter oder -güter im Nachfüllprozess) warten müssen. Der (Bewegungs-)Weg und aktuelle Standort der Manipulatoren löst die Transportaufträge der FTF aus.

Die Transferplätze sind dynamisch belegbar. Dies bedeutet, dass die Transferplätze mehrfach nutzbar sind, insbesondere durch mehrere Manipulatoren für unterschiedliche Aufträge bzw. Teilaufträge. Bei einer besonderen Ausgestaltung entscheidet der Manipulator in Echtzeit, d.h. erst kurz vor der Abgabe, welchen der Transferplätze er von mehreren möglichen Transferplätzen ausgewählt. Wenn der Manipulator z.B. einen Kommissionierauftrag beginnt, steht es ihm frei, einen von vielen leeren Auftragsbehältern auszuwählen, die vorzugsweise vorab innerhalb seiner (aktuellen) Aktionszone, d.h. in der unmittelbaren Nähe des Entnahmeorts, auf den Transferplätzen bereitgestellt wurden. Trotz dieser Ungewissheit (Welchen der möglichen Zielstellen/Transferplätze wählt der Manipulator aus?), ist die Steuerung in der Lage, den "Auftrag" (Zielbehälter) sicher und effizient bis zu seiner vollständigen Erledigung durch das System zu navigieren, indem dieser Zielbehälter mit seinen weiteren, ihm zugeordneten Transferaktionen und Bewegungen synchronisiert wird bzw. schnell an seinen Bestimmungsort gebracht wird. Dies bedeutet wiederum, dass dieser Zielbehälter immer rechtzeitig am richtigen Ort für weitere Transferaktionen (Auftragszeilen) des entsprechenden Kommissionierauftrags bereitgestellt wird.

Die dynamische Belegung der Transferplätze erlaubt es auch, dass das Lager- und Kommissioniersystem gleichzeitig in einem Kommissioniermodus und in einem Nachfüll- bzw. Einlagermodus betrieben wird. Die FTF können sowohl die Zielstellen (z.B. Auftragsbehälter) als auch Nachfüllwaren (mit oder ohne Ladehilfsmittel, wie z.B. einen sortenrein mit Stückgütern befüllten Lagerbehälter) gleichzeitig innerhalb des Systems transportieren. Dies bedeutet mit anderen Worten, dass innerhalb des Systems gleichzeitig kommissioniert und nachgefüllt bzw. eingelagert werden kann. Dies hat wiederum eine Effizienzsteigerung zur Folge. Das zeitlich parallele Nachfüllen stellt aber nur einen Aspekt einer Multiparallelität dar.

Die Multiparallelität äußert sich auch darin, dass Aufträge generell in mehrere Teilaufträge geteilt werden können (Auftrags-Splitting). Sowohl die Aufträge als auch die Teilaufträge können auf mehrere Manipulatoren verteilt werden (Mitarbeiter-Splitting), die die Aufträge und/oder Teilaufträge gleichzeitig, das heißt parallel, bearbeiten können. Ferner ist es möglich, dass mehrere Manipulatoren gleichzeitig die gleiche Zielstelle (Kommissionierung) oder Quelle (Nachfüllung) bearbeiten bzw. auf diese zugreifen.

Ein weiterer besonderer Vorteil ist darin zu sehen, dass die Manipulatoren arbeitslastoptimiert arbeiten können. Die innerhalb des Systems auszuführenden Transferaktionen, die durch die Aufträge, insbesondere durch die Vielzahl der Auftragszeilen, definiert sind, werden optimiert (z.B. batch-orientiert, weg-optimiert etc.) auf die Manipulatoren verteilt. Jeder Manipulator bekommt eine, vorzugsweise manipulatorspezifische, Anzahl von durchzuführenden Transaktionen zugeteilt. Diese Anzahl von Transaktionen definiert die spezifische Arbeitsbelastung des Manipulators (z.B. Picks/Laufmeter oder Aktionen pro Kommissionierzone-Einheitslänge oder Ähnliches). Die spezifische Arbeitsbelastung ist vorzugsweise für alle Manipulatoren im Wesentlichen gleich. Dies bedeutet, dass jeder der Manipulatoren ungefähr gleiche viele Transferaktionen pro Zeiteinheit bzw. Einheitslänge (z.B. Laufmeter) durchführen muss, wobei die Anzahl der Transferaktionen leicht innerhalb geringer Grenzen schwanken darf.

Die Erfindung ermöglicht ferner eine wegoptimierte Kommissionierung bzw. Einlagerung. Die Erfindung ermöglicht alternativ und/oder ergänzend eine batchorientierte Kommissionierung bzw. Einlagerung. Sowohl die Wegoptimierung als auch die Batchoptimierung können unter Berücksichtigung einer vorgegebenen Pick- bzw. Hit-Rate erfolgen. Dies ist insbesondere möglich, weil die Transferaktionen (Entnahme bei Kommissionierung/Abgabe bei Einlagerung) vom Transport der entsprechenden Waren durch die FTF entkoppelt sind. Die Waren können ferner beliebig lang auf den Transferplätzen gepuffert werden. Generell gilt, dass ein parkendes oder fahrendes FTF selbst einen Pufferplatz darstellen kann.

Als weiterer Vorteil ist zu nennen, dass die Erfindung ohne eine individualisierte Verfolgung der Waren innerhalb des Systems auskommt. Generell ist es nicht erforderlich, die Waren individuell unterscheidbar zu markieren (z.B. mit einem Strichcode, RFID-Tag, etc.). Die Verfolgung des Warenflusses innerhalb des Systems kann allein auf Basis von Transportinformationen der FTF und Quittierungsinformationen der Manipulatoren erfolgen. Die Steuerung hat jederzeit Kenntnis davon, an welchem Ort sich die FTF, vorzugsweise aktuell, aufhalten. Insbesondere sind die Start- und Zielpunkte der FTF bekannt. Die Manipulatoren wiederum können gegenüber der Steuerung die erfolgreiche Durchführung einer Transferaktion (Abgabe eines entnommenen Artikels an Zielstelle) quittieren. Diese Quittierungsinformationen kann die Steuerung wiederum als Startsignale für weitere Transportaufträge der FTF, und insbesondere für deren Planung, nutzen.

Im Gegensatz zu klassischen Stetigfördersystemen gibt es durch den Einsatz der FTF keine Weichen, Kreuzungen oder Abzweigungen, die den Einsatz von Identifizierungseinrichtungen (z.B. Lichttaster, Lichtschranken, Scanner, Kameras oder Ähnliches) erforderlich machen. Die FTF, und damit die Waren, können sich entlang beliebig wählbarer Transportwege durch das System bewegen. Serien- und Reihenfolgefehler sind ausgeschlossen. Dies bedeutet, dass die Waren nicht unerwartet ihre (relative) Reihenfolge während eines Transports durch das System ändern können. Es gibt kein starres Layout der Transportwege wie z.B. bei Stetigförderern. Die FTF können beliebig durch das System navigiert werden. Dies wiederum erlaubt es, die FTF zum Sequenzieren und Sortieren einzusetzen.

Klassische Initialisierungspunkte sind im vorliegenden System nicht erforderlich. Ein klassischer Initialisierungspunkt zeichnet sich dadurch aus, dass alle Zielstellen (z.B. Auftragsbehälter) diesen Initialisierungspunkt passieren müssen, damit der Zielstelle ein Auftrag datentechnisch zugewiesen werden kann. Bei der vorliegenden Erfindung erfolgt die Auftragsinitialisierung (Zuweisung einer Zielstelle zu einem Auftrag) spätestens in dem Moment, wenn der Manipulator z.B. beim Abgeben einer zu kommissionierenden Ware eine von mehreren möglichen Zielstellen durch Einwurf der Ware z.B. in Behälter auf einen der Transferplätze auswählt. Die Initialisierung erfolgt in diesem Fall also durch Abgabe der Ware an die Zielstelle selbst.

Als weiterer Vorteil ist zu nennen, dass die Einlastung eines Kommissionier/Einlager-Auftrags in das System jederzeit möglich ist. Dies bedeutet, dass dem System jederzeit ein neuer Auftrag hinzugefügt werden kann, der dann parallel (das heißt insbesondere gleichzeitig) mit den bereits eingelasteten Aufträgen bearbeitet wird, ohne einen Ablauf von bereits eingelasteten Aufträgen zu stören.

Die vorliegende Erfindung ist in einer Vielzahl verschiedener Bereiche anwendbar. Die Erfindung kann im Bereich des E-Commerce eingesetzt werden. Mit der Erfindung ist ferner eine Stückgutkommissionierung sowie eine Gebindekommissionierung (Case-Picking) möglich, wobei Case-Picking die bevorzugte Anwendung darstellt.

Die Erfindung ist jederzeit skalierbar, indem z.B. mehr oder weniger FTF eingesetzt werden oder mehr oder weniger Manipulatoren eingesetzt werden. Zu Spitzenzeiten können mehr Manipulatoren und/oder FTF als üblich gleichzeitig im System arbeiten, um die Leistung zu steigern.

Gegenüber der WO 2015/035300 zeichnet sich die Erfindung dadurch aus, dass sich die Manipulatoren und die FTF bzw. Zielstellen/Quellen (Kommissionierung/Einlagerung) unabhängig und entkoppelt voneinander bewegen. Die Erfindung benötigt keine Sortiereinrichtung, da die Sortierfunktion (und gegebenenfalls auch eine Sequenzierungsfunktion) von den FTF selbst erledigt wird. Eine Beladung und Entladung der FTF erfolgt bei der Erfindung vorzugsweise passiv, das heißt ohne besondere Steuerung und Aktuatoren. Die WO 2015/035300 offenbart keine Arbeitslastoptimierung. Die WO 2015/035300 offenbart auch keine Dynamisierung der Zielstellen. Auch werden keine Transferplätze in der Kommissionierzone und die damit verknüpften Funktionalitäten und Vorteile offenbart.

Die vorliegende Erfindung unterscheidet sich von der US 2002/008723 A1 durch den Einsatz der FTF. Die Erfindung lässt jederzeit eine Priorisierung eines Auftrags zu, indem der priorisierte Auftrag die anderen Aufträge überholt. Dies bedeutet, dass die Abarbeitung der Aufträge und das Erreichen eines Zielpunkts jederzeit beliebig geändert werden kann, weil sich die FTF überholen können. Dies ist bei einem Sammelband nicht möglich. Außerdem benötigt die Erfindung keine nachgeordnete Sortiereinrichtung. Mit der Erfindung können auch schwer handhabbare und/oder zerbrechliche Waren kommissioniert oder eingelagert werden. Bei der US 2002/008723 A1 ist dies nicht möglich, weil die Waren aus den Sammelbehältern auf das Sammelband fallen. Außerdem benötigen die Sammelanordnungen und das Sammelband der US 2002/008723 A1 (innerhalb einer Gasse) mehr Platz als die Erfindung. Bei der Erfindung wird Raum in der Querrichtung einer Regalgasse gespart, insbesondere wenn die Transferplätze in das Regal integriert sind. Die Integration der Transferplätze erfolgt vorzugsweise in einer der untersten Regalebenen, z.B. am Boden, wo die Sammelbehälter und das Sammelband der US 2002/008723 A1 technisch nicht vorgesehen werden können. Ferner ist es bei der Erfindung möglich, eine gepufferte Ware jederzeit vom Transferplatz abzuziehen, indem ein FTF einen entsprechenden Transportauftrag erhält. Bei der US 2002/008723 A1 muss der Abwurf der gesammelten Waren zwingend in einen vorherbestimmten Bereich des Sammelbands erfolgen (Fenster-Technik).

Im Gegensatz zu den anderen klassischen Kommissionierverfahren gemäß den Figuren 9 - 12 zeichnet sich die vorliegende Erfindung insbesondere durch die arbeitslastoptimierte Arbeitsweise aus. Die Manipulatoren sind im Mittel alle einer ähnlichen Arbeitslast ausgesetzt. Dennoch können sich die Manipulatoren wegoptimiert durch das System bewegen. Ferner können mehrere Manipulatoren gleichzeitig auf engstem Raum arbeiten. Die vorliegende Erfindung trägt lediglich dafür Sorge, dass es zu keinen Kollisionen zwischen den Manipulatoren und den FTF kommt. Die Erfindung zeichnet sich durch die Multiparallelität aus. Dies bedeutet insbesondere, dass viele Aufträge von vielen Manipulatoren gleichzeitig, insbesondere bei gleicher mittlerer Arbeitslast, ausgeführt werden können. Es gibt kein starres Layout, weil die fixen Streckenabläufe der konventionellen Fördertechnik bzw. Regalbediengeräte wegfallen.

Die Manipulatoren "ziehen" die Aktionszonen mit sich. Die Aktionszonen bewegen sich in diesem Sinne dynamisch durch die Kommissionierzone. Die Bewegungen der Manipulatoren lösen Bewegungen bzw. Transportaufträge der FTF aus. Die Manipulatoren bzw. deren Aktionszonen bewegen sich von einem Entnahme/Abgabe-Ort (Quelle bei Kommissionierung/Ziel bei Einlagerung) zu einem nächsten Entnahme/Abgabe-Ort, die durch eine Reihenfolge der ausgewählten Transferaktionen, das heißt dem Bewegungsweg, vorgegeben sind. In diesem Sinne "triggern" die Manipulatoren die Transportaufträge bzw. die Bewegungen der FTF.

Bei einer besonderen Ausgestaltung der Erfindung weist jede der Aktionszonen eine einstellbare, vorzugsweise feste, geometrische Abmessung auf.

Die räumliche Größe der Aktionszonen beeinflusst eine Anzahl von innerhalb der jeweiligen Aktionszone erreichbaren Transferplätzen und somit der möglichen Transferaktionen. Je größer die Aktionszone ist, desto mehr Transferplätze können in der Aktionszone lokalisiert sein. Je größer die Aktionszone ist, desto höher kann eine Aktionsdichte sein. Es kann Situationen geben, in denen eine hohe Anzahl von (möglichen/auswählbaren) Transferplätzen wünschenswert ist, so dass die Größe der Aktionszone relativ groß gewählt wird. Um in diesem Fall zu vermeiden, dass die Arbeitslast des Manipulators gegenüber einem vorgegebenen Wert zu groß wird, kann ein weiterer Manipulator in der gleichen Aktionszone simultan eingesetzt werden, um die Anzahl der Transferaktionen, und somit die individuelle Arbeitslast, zu verringern. Die Größe der Aktionszone stellt also einen variablen Parameter dar, mit dem Einfluss auf die Arbeitslastoptimierung genommen werden kann. Auch wenn sich die räumlichen Größen von Aktionszonen unterschiedlicher Manipulatoren unterscheiden könnten, empfiehlt es sich, jedem der Manipulatoren eine identisch große Aktionszone zuzuweisen bzw. zuzuordnen. Es versteht sich aber, dass derartige Zuordnungen vorzugsweise nur für vorherbestimmte Zeitdauern gültig sind und anschließend geändert werden könnten.

Bei einer weiteren Ausgestaltung der Erfindung definiert jede der Transferaktionen ferner eine Anzahl und einen Typ der Handhabungseinheiten, die durch den jeweiligen Manipulator zwischen den einander zugeordneten Orten zu transferieren ist.

Diese Information gibt dem Manipulator an, wie viele Handhabungseinheiten zwischen den einander zugeordneten Orten zu transferieren sind. Diese Information kann dem Manipulator über ein, vorzugsweise mitgeführtes, Kommissionierleitsystem (Pick-by-Vision, Pick-by-Voice, Pick-by-Light, Put-to-Light oder Ähnliches) angezeigt werden. Die Anzeige des Typs der Handhabungseinheit unterstützt die korrekte Durchführung der Transferaktion zusätzlich. Es versteht sich, dass auch zumindest der Entnahme/Abgabe-Ort (Quelle/Zielstelle) angezeigt werden kann. Vorzugsweise wird natürlich auch der Entnahme-Ort (Zielstelle/Quelle) angezeigt.

Bei noch einer weiteren Ausführungsform der Erfindung entspricht eine Gesamtheit aller Transferaktionen der Vielzahl der Kommissionier/Einlager-Aufträge.

Um die Optimierungsschritte zufriedenstellend ausführen zu können, ist es empfehlenswert, eine ausreichend große Anzahl von durchzuführenden Transferaktionen zu berücksichtigen. Die Summe aller Transferaktionen sollte die Gesamtheit der Aufträge abdecken. Es versteht sich natürlich, dass auch weniger Transferaktionen berücksichtigt werden können. In diesem Fall wird die Optimierung jedoch schwieriger, weil aus weniger Transferaktionen pro Kommissionierzone-Einheitslänge ausgewählt werden kann, um die angestrebte Arbeitslastanpassung zu erreichen.

Bei einer weiteren Ausführungsform der Erfindung ist eine gemittelte Arbeitslast für jeden der Manipulatoren im Wesentlichen gleich.

Auf diese Weise kann verhindert werden, dass die Manipulatoren unterschiedlich stark beansprucht werden. Dies ist insbesondere bei menschlichen Manipulatoren von Bedeutung, um die allgemeine Zufriedenheit sicherzustellen. Bei maschinellen Manipulatoren wird so sichergestellt, dass alle Manipulatoren eine ähnliche Lebensdauer aufweisen. Der Verschleiß wird reduziert.

Bei einer weiteren besonderen Ausgestaltung der Erfindung wird der Schritt des Analysierens unter Berücksichtigung einer Verteilung der Handhabungseinheiten in der Bereitstellungszone und/oder unter Berücksichtigung einer Struktur, das heißt insbesondere einer Anzahl der Zeilen bzw. Menge pro Zeile, der Kommissionier/Einlager-Aufträge zum Zwecke der arbeitslastoptimierten Erzeugung der Aktionsaufträge durchgeführt.

Vorzugsweise ist die Verteilung der Handhabungseinheiten über die Bereitstellungszone statisch. Dies bedeutet, dass sich die Verteilung zumindest für einen gewissen Zeitraum (z.B. Tag oder Woche) nicht verändert. Die Verteilung der Handhabungseinheiten ist in diesem Sinne nicht chaotisch bzw. dynamisch, da die Dynamik in den Bewegungen der FTF abgebildet ist.

Weiter ist es von Vorteil, dass die Erzeugung der Transportaufträge in Abhängigkeit eines aktuellen Standorts des jeweiligen Manipulators im System, vorzugsweise in Echtzeit, erfolgen kann.

Hierdurch kommt zum Ausdruck, dass ein aktueller Standort des jeweiligen Manipulators die Transportaufträge der FTF triggert. Die Steuerung ist eingerichtet, einen aktuellen Standort des jeweiligen Manipulators, zumindest annähernd, zu erkennen bzw. zu ermitteln. Zu diesem Zweck können z.B. die oben genannten Quittierungsinformationen verwendet werden. Ferner kann der Bewegungsweg analysiert werden, da der Bewegungsweg vorzugsweise die Reihenfolge der Entnahme/Abgabe-Orte vorgibt. Wenn die Steuerung über ausreichend Rechenkapazität und eine ausreichend große Flotte von FTF verfügt, ist es möglich, die Transportaufträge in Echtzeit zu berechnen. Dies bedeutet, dass die Transportaufträge nicht lang vorab in der Vergangenheit berechnet werden, sondern in Abhängigkeit von einer aktuellen Arbeitsgeschwindigkeit des jeweiligen Manipulators. So kann es z.B. vorkommen, dass einer der Manipulatoren schneller als üblich arbeitet, wohingegen ein anderer der Manipulatoren langsamer als üblich arbeitet. In diesem Fall kann die Steuerung die FTF anders einsetzen, als normal. Der Manipulator, der schneller arbeitet, kann mit mehr FTF versorgt werden als der Manipulator, der langsamer arbeitet. Die Steuerung ist also dazu in der Lage, kurzfristig auf Arbeitslastschwankungen zu reagieren, indem die Transportaufträge entsprechend angepasst werden. Es empfiehlt sich jedoch, nicht punktgenau zu planen, sondern zumindest einen gewissen vorausschauenden zeitlichen Puffer zu berücksichtigen. Dies bedeutet mit anderen Worten, dass die Steuerung vorausschauend die Transportaufträge bereits für eine kurze Zeitdauer (z.B. ein bis zwei Minuten) im Voraus bestimmen kann.

Bei einer weiteren Ausführungsform der Erfindung ist jeder der Transferplätze mehrfach, aber zeitlich versetzt, auswählbar.

Dies bedeutet mit anderen Worten, dass verschiedene Manipulatoren den gleichen Transferplatz benutzen können, um unterschiedliche Aufträge - zeitlich versetzt - abzuarbeiten. Auch hier drückt sich wiederum die Dynamik der Erfindung aus.

Weiter zeichnet sich die Erfindung dadurch aus, dass die Handhabungseinheiten sequenziert und/oder sortiert an einem jeweiligen Bestimmungsort ankommen.

Der Bestimmungsort kann durch einen Warenausgang, einen Versandbereich, eine Packstation, Transferplatz oder ähnliches realisiert sein. Die Kommissionier/EinlagerAufträge sind also ohne separate Sortiereinrichtung sequenzierbar und sortierbar.

Insbesondere wird jedem der FTF und jedem der Transferplätze eine eindeutige Identifizierung (datentechnisch) zugewiesen, wobei die Steuerung eingerichtet ist, einen (materialflusstechnischen) Weg von jeder der Handhabungseinheiten durch das System ausschließlich auf Basis der Transportaufträge und auf Basis von Quittierinformationen zu verfolgen, die die Identifizierungen der Transferplätze und der FTF benutzen.

Ferner wird die oben genannte Aufgabe durch ein Lager- und Kommissioniersystem nach Anspruch 12 gelöst.

Gemäß einer besonderen Ausgestaltung der Erfindung gelangen die Handhabungseinheiten verfolgungslos mittels der FTF an einen jeweiligen Bestimmungsort.

Gemäß einer noch weiteren Ausführungsform der Erfindung sind entlang der Bereitstellungszone pro Kommissionierzonen-Einheitslänge ein bis zwei, insbesondere drei bis vier, Transferplätze vorgesehen.

Vorzugsweise sind mindestens 50 %, insbesondere 60 % bis 70 %, einer Gesamtlänge der Bereitstellungszone mit den Transferplätzen versehen.

Die hohe Anzahl von Transferplätzen bzw. die hohe Transferplatzdichte stellt sicher, dass die Manipulatoren die gewünschte Handhabungseinheit entweder entnehmen (Kommissionierung) oder abgeben (Nachfüllung) können, insbesondere ohne warten zu müssen. Diese Aktion erfolgt also insbesondere unterbrechungsfrei. Jeder einzelne der Transferplätze kann vorzugsweise simultan von einem FTF bedient werden.

Außerdem ist es von Vorteil, wenn der Transport der Handhabungseinheiten von und zu den Transferplätzen ausschließlich mittels der FTF erfolgt.

Die FTF sind insbesondere für die Sortierung, Sequenzierung, das freie Streckenlayout und Ähnliches verantwortlich.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Blockdiagramm eines Lager- und Kommissioniersystems der Erfindung;
- Fig. 2: eine perspektivische Ansicht einer Ausführungsform des Systems bei einer Case-Pick-Anwendung;
- Fig. 3: eine perspektivische Ansicht einer weiteren Ausführungsform bei einer Case-Pick-Anwendung;
- Fig. 4.: eine vergrößerte perspektivische Ansicht bei einer gemischten Anwendung aus Case-Picking und Piece-Picking;
- Fig. 5: ein Flussdiagramm eines Verfahrens zum Betreiben eines Lager- und Kommissioniersystems gemäß der Erfindung;
- Fig. 6: ein Blockdiagramm eines Systems zur Verdeutlichung eines Aktionsauftrags sowie eines Bewegungswegs;
- Fig. 7: ein schematisiertes Blockdiagramm einer Aktionsdichte sowie einer Aktionszone;
- Fig. 8: eine Darstellung aus dem Dokument WO 2015/035300; und
- Figuren 9 bis 13: Darstellung herkömmlicher Kommissionierverfahren.

Wenn im nachfolgenden von vertikalen und horizontalen Orientierungen gesprochen wird, versteht es sich von selbst, dass die Orientierung jederzeit durch eine Drehung miteinander vertauscht werden können und deshalb nicht einschränkend zu interpretieren sind. Wie in der (Intra-)Logistik üblich, werden in Lager- und Kommissioniersystemen (Distributionsanlagen, Materialhandhabungsanlagen, etc.) eine Längsrichtung mit "X", eine Querrichtung mit "Z" und eine Höhenrichtung mit "Y" bezeichnet. Die Richtungen X, Y und Z definieren vorzugsweise ein kartesisches Koordinatensystem.

Unter einer Bereitstellungseinheit wird nachfolgend eine Einheit verstanden, die insbesondere im Wareneingangsbereich und im Lagerbereich (Regallager, Bodenlager, Kanallager, etc.) eingesetzt wird. Eine Bereitstellungseinheit ist typischerweise typenrein, kann aber auch gemischt vorliegen. Die Bereitstellungseinheit kann ein Ladehilfsmittel und ein oder mehrere Handhabungseinheiten umfassen. Als Lagerladehilfsmittel werden üblicherweise Ladehilfsmittel eingesetzt, wie z.B. Paletten, Gitterboxen, Container, Behälter, Kartons, Tablare, (Hänge-)Taschen und Ähnliches. Die Handhabungseinheiten können aber auch ohne Lagerhilfsmittel bzw. Ladehilfsmittel bereitgestellt werden. Unter einer Handhabungseinheit wird nachfolgend ein "Artikel" bzw. eine "Ware" verstanden. Eine Ware kann ein Stückgut sein. Eine Ware kann ein Gebinde sein. Eine Handhabungseinheit ist eine durch den Handhabungstyp unterscheidbare (kleinste) Einheit eines (Artikel-)Sortiments. Stückgüter sind individualisierte, unterscheidbare Güter, die einzeln gehandhabt werden können und deren Bestand stückweise oder als Gebinde (Case) geführt wird. Das Gebinde ist ein allgemeiner Begriff für eine handhabbare Einheit, die manuell oder mittels technischem Gerät (Lastaufnahmemittel, Greifer, etc.) bewegt werden kann. Die Begriffe "Artikel", "Gebinde", "Ware" und "Stückgut" werden hier äquivalent benutzt.

Ein "Kommissionierauftrag" liegt üblicherweise als Datensatz vor, der bearbeitet werden kann. Der Kommissionierauftrag kann ein Kopffeld, ein Prioritätsfeld und/oder ein Artikelfeld aufweisen. Das Kopffeld kann unter anderem Informationen zum Kunden, der eine Bestellung aufgegeben hat, zur (Kunden-)Adresse oder eine Kunden-Identifikationsnummer sowie eine Bestell-/Auftragsnummer aufweisen. Das Prioritätsfeld enthält Angaben darüber, ob es sich um einen normalen Auftrag oder einen Eilauftrag handelt. Ein Eilauftrag ist ein Auftrag mit hoher (Bearbeitungs-)Priorität, der üblicherweise vorrangig vor normalen Aufträgen behandelt wird.

Eine "Regalanordnung" (z.B. ein Regallager) umfasst üblicherweise eine Vielzahl von Regalen, die in Form von Einzelregalen oder Doppelregalen vorgesehen sind. Doppelregale sind Einzelregale, die Rücken an Rücken aufgestellt sind. Zwischen den Regalen sind Regalgassen definiert, die üblicherweise in Längsrichtung der Regale verlaufen und als Aktionsraum für Manipulatoren, fahrerlose Transportfahrzeuge (FTF, AGV, etc) und/oder Regalbediengeräte dienen. Die Regale enden an ihren, sich gegenüberliegenden, (kürzeren) Stirnseiten, die wiederum in einer Ebene senkrecht zur Längsrichtung der Gasse orientiert sind. Die Regale selbst weisen eine Vielzahl von (Regal-)Lagerplätzen bzw. Stellplätzen (z.B. Regalfächer, Ende eines Durchlaufkanals, etc.) auf, die bei der vorliegenden Erfindung genutzt werden können.

Die Begriffe "Regalplatz", "Lagerplatz", "Stellplatz", "Palettenplatz" werden äquivalent benutzt. Mit diesen "Plätzen" sind Orte innerhalb des Systems gemeint, wo die Waren bevorratet sind. Ein "Regalplatz" bzw. ein "Regalfach" ist ein Ort, wo die Waren innerhalb eines Regals zum Zwecke einer Kommissionierung bereitgestellt werden.

Ein "Transferplatz" ist ein Ort, wo eine oder mehrere Waren zum Zwecke eines Austauschs mit einem fahrerlosen Transportfahrzeug (FTF) pufferbar ist bzw. sind. Die Transferplätze dienen einer vorübergehenden Pufferung von einer oder mehreren Waren und sind materialflusstechnisch mit den FTF verbindbar. Ein Transferplatz kann ein Gestell aufweisen, auf dem die Waren zur Abholung oder Andienung durch die FTF ablegbar sind. Ein Transferplatz kann durch einen "Parkplatz" für eines der FTF realisiert sein. Die Transferplätze weisen fest definierte Koordinaten innerhalb des Systems auf und sind vorzugsweise stationär, d.h. örtlich fix.

Des Weiteren arbeitet die vorliegende Erfindung im Wesentlichen nach dem Prinzip "Mann-zur-Ware". Wenn auch Maschinen neben Menschen eingesetzt werden, wird dieses Prinzip vorliegend auch als "Manipulator-zur-Ware-Prinzip" bezeichnet. Bei diesen Prinzipen kann sich ein Mensch, der nachfolgend auch als "Kommissionierer" bezeichnet wird, und/oder eine Maschine zu der zu kommissionierenden Ware hin bewegen.

Generell unterscheidet man beim Kommissionieren verschiedene Strategien. Es gibt das auftragsbezogene Kommissionieren und das artikelbezogene Kommissionieren, wobei das Zusammenstellen der Waren selbst entweder seriell, also nacheinander, oder parallel, also gleichzeitig stattfinden kann. Beim auftragsbezogenen Kommissionieren wird ein Auftrag als Ganzes bearbeitet, das heißt alle Waren des Auftrags werden seriell und/oder parallel (Auftragssplitting) zusammengestellt. Auf welche Art und Weise kommissioniert wird, kann von vielen Faktoren abhängen. Ein Faktor, der sicherlich eine Rolle spielt, ist eine durchschnittliche Auftragsstruktur. Es macht einen Unterschied, ob verschiedene Waren in kleinen Stückzahlen zu kommissionieren sind oder ob immer wieder die gleichen Waren (-typen) in hohen Stückzahlen zu kommissionieren sind. Es macht einen Unterschied, ob ein Auftrag viele oder wenige Zeilen aufweist.

Eine "Batch" ist eine Zusammenfassung mehrerer Aufträge zu einem Verarbeitungslos. Eine "Batch" ist also eine Zusammenfassung von mehreren (Kommissionier-)Aufträgen zu einer geordneten Menge oder Liste von Aufträgen. Im Batch-Betrieb werden Aufträge zunächst gesammelt und sortiert, um dann sequenziell in einem Schub, das heißt in einer "Batch" verarbeitet zu werden.

Eine Koordinierung der Abarbeitung von Aufträgen übernimmt ein Auftragsabwicklungssystem, das meist in eine Kommissioniersteuerung integriert ist, die z.B. auch ein Warenwirtschaftssystem aufweisen kann. Die Kommissioniersteuerung kann ferner eine (Lager-)Platzverwaltung sowie eine Informationsanzeige integriert haben. Die Kommissioniersteuerung wird üblicherweise durch eine Datenverarbeitungsanlage realisiert, die vorzugsweise zur verzögerungsfreien Datenübertragung und Datenverarbeitung im Online-Betrieb arbeitet. Die Kommissioniersteuerung kann durch eine oder mehrere Steuereinheiten implementiert sein, die nachfolgend noch näher beschrieben werden. Die Steuerung der Erfindung kann eine derartige Kommissioniersteuerung umfassen.

Sowohl beim "Case-Picking" als auch beim "Piece-Picking" werden die Manipulatoren zu Entnahme-Orten (Zielstelle) gelenkt, wenn kommissioniert wird, oder zu Abgabe-Orten (Zielstelle) gelenkt, wenn nachgefüllt bzw. eingelagert wird. Nachfolgend werden exemplarisch ausschließlich Kommissioniervorgänge betrachtet. Es versteht sich, dass die nachfolgenden Erklärungen auch für Nachfüll- bzw. Einlagerungsprozesse (Replenishment) gelten, die sich lediglich in einer Transferaktionsrichtung von Kommissionierprozessen unterscheiden.

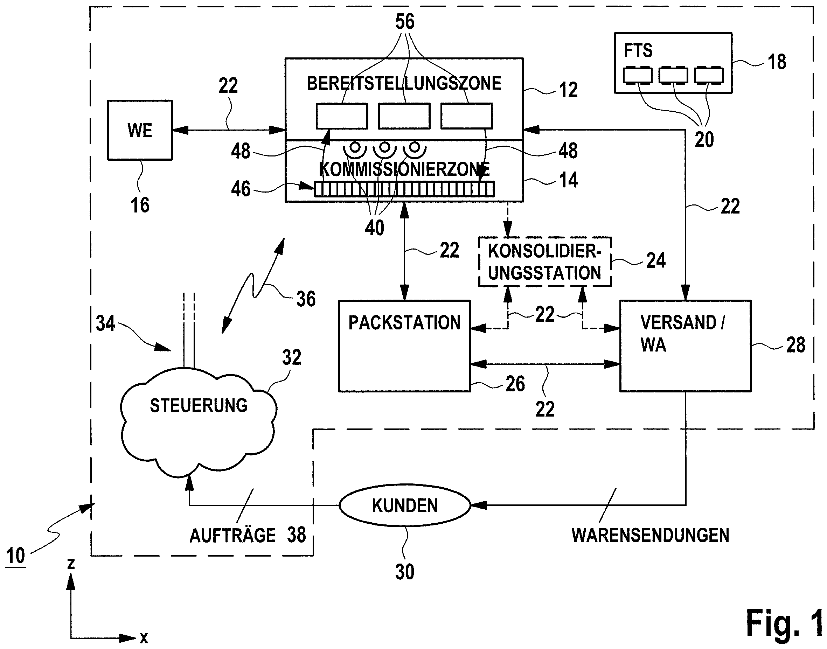

Fig. 1 zeigt ein Blockdiagramm eines Lager- und Kommissioniersystems (nachfolgend kurz auch nur als "System" bezeichnet) 10 einer Draufsicht. Das System weist eine Bereitstellungszone 12 und eine daran angrenzende Kommissionierzone 14 auf. Die Bereitstellungszone 12 kann über einen Wareneingang (WE) 16 mit Waren versorgt werden. Aus dem Wareneingang 16 stammen die Waren zum Einlagern in der Bereitstellungszone 12, die anschließend in der Kommissionierzone 14 gemäß Kommissionieraufträgen kommissioniert (entnommen und abgegeben) werden. Die Kommissionierung kann einstufig oder mehrstufig erfolgen, wie oben erwähnt.

Das System 10 weist ferner ein fahrerloses Transportsystem (FTS) 18 auf. Das FTS 18 weist eine Vielzahl von fahrerlosen Transportfahrzeugen (FTF) 20 auf. Das FTS 18 dient mit seinen FTF 20 einem Materialfluss bzw. Warenfluss innerhalb des Systems 10 und insbesondere in den Zonen 12 und 14. Der Materialfluss innerhalb des Systems 10 ist durch Pfeile 22 angedeutet. Es versteht sich, dass nicht alle möglichen Verbindungen zwischen den Blöcken der Fig. 1 durch Pfeile 22 dargestellt sind. Ferner versteht es sich, dass der Materialfluss 22 im gesamten System 10 nicht ausschließlich mittels des FTS 18 erfolgen muss. Ergänzend können klassische Fördersysteme, wie z.B. Stetigförderer, Vertikalförderer, Regalbediengeräte und Ähnliches zwischen verschiedenen Blöcken eingesetzt werden.

Optional weist das System 10 eine Konsolidierungsstation 24 auf, die insbesondere bei einer mehrstufigen Kommissionierung von Gebinden (z.B. Full-Case-Picking) zum Einsatz kommt. Die Konsolidierungsstation 24 dient einem auftragsorientierten Sortieren von Waren.

Das System 10 kann ferner eine oder mehrere Packstationen 26 sowie einen Versand bzw. einen Warenausgang (WA) 28 aufweisen. In den Packstationen 26 können fertig gesammelte (Kommissionier-Aufträge) verpackt und/oder aus Sammelbehältnissen in Versandbehältnisse umgeschichtet werden. Im Versand bzw. Warenausgang 28 kann erneut eine auftragsorientierte Sortierung (z.B. nach Zielfilialen eines Handelsunternehmens) erfolgen. Die Konsolidierungsstation 24 kann in die Kommissionierzone 14, in die Packstation 26 und/oder in den Versand 28 integriert sein. Aus dem Versand 28 werden fertig kommissionierte und gepackte Aufträge in Form von Warensendungen an die Kunden 30 versendet. Die Kunden 30, die nicht Teil des Systems 10 sind, platzieren ihre Kundenaufträge bzw. Bestellungen z.B. über das Internet oder einen anderen Übertragungsweg im System 10. Zur Analyse und Abarbeitung der Kundenaufträge weist das System 10 eine Steuerung 32, insbesondere eine Kommissioniersteuerung auf. Die Steuerung 32 steht über feste Leitungen 34 und/oder drahtlos (siehe Pfeil 36) mit den verschiedenen Komponenten des Systems 10 in Verbindung. Hierbei handelt es sich insbesondere um Datenverbindungen.

Die Steuerung 32 kann mehrere Aufgaben haben. Die Steuerung 32 kann dezentral aufgebaut sein. Die Steuerung 32 kann modular aufgebaut sein. Insbesondere implementiert die Steuerung 32 ein oder mehrere der folgenden Funktionen: Auftragsverwaltung, Kommissionierleitstrategien, Warenwirtschaftssystem, Lagerverwaltung, Materialflussregelung, Platzverwaltung, FTF-Navigation und FTF-Routenwahl. Diese Funktionen sind üblicherweise in Form von Software und/oder Hardware implementiert. Eine Kommunikation kann außerdem über einen (oder mehrere) Kommunikationsbus(se) stattfinden. Die Steuerung 32 kann Teil eines Zentralrechners (nicht dargestellt) sein.

Die Auftragsverwaltung sorgt dafür, dass von den Kunden 30 eingehende (Kommissionier-)Aufträge 38 zur Erledigung (Abarbeitung) auf mehrere Manipulatoren (Menschen und/oder Maschinen) 40 verteilt werden. Dabei spielt insbesondere der Faktor Auslastung eine Rolle. Weitere Faktoren wie Warensortimentsverteilung, Wegoptimierungen und Ähnliches können ebenfalls eine Rolle spielen. Den Manipulatoren kommt im Wesentlichen die Aufgabe zu, die Waren zu transferieren, d.h. die Waren zu greifen und abzugeben. Die Kommissionieraufträge 38 können zur Abarbeitung z.B. in Teilaufträge geteilt werden. Die Kommissionieraufträge 38 können ferner für ein "Batch-Picking" aufbereitet werden. Die Steuerung 32 ist angepasst, eingehende und eingegangene Kommissionieraufträge 38 dahingehend zu analysieren, und insbesondere so, dass eine Vielzahl von Batches gebildet wird, wobei eine Batch sich durch die Summe aller Waren eines jeweiligen Warentyps über alle eingegangen bzw. zu analysierenden Aufträge 38 auszeichnet.

Die Manipulatoren 40 bewegen sich im Wesentlichen zwischen der Bereitstellungszone 12 und der Kommissionierzone 14, wie es nachfolgend noch näher erläutert werden wird.

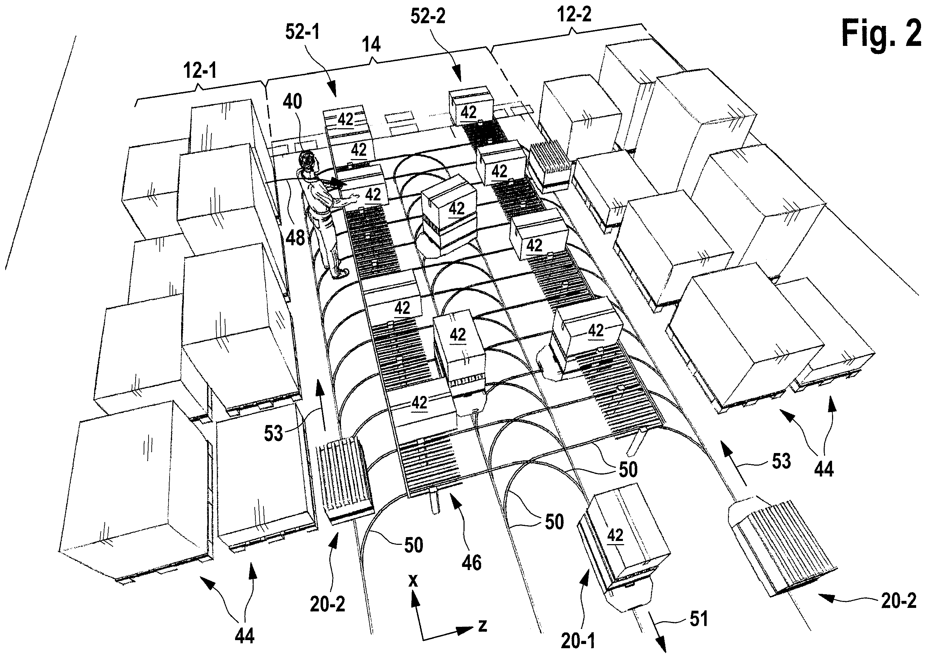

Die Figuren 2 bis 4 zeigen verschiedene Anwendungen der vorliegenden Erfindung.

Fig. 2 zeigt eine perspektivische Ansicht einer mehrstufigen Case-Pick-Anwendung, wobei insbesondere die erste Kommissionierstufe gezeigt ist. Ein menschlicher Manipulator 40 entnimmt Gebinde (Cases) 42 von, vorzugsweise typenreinen, Paletten 44, die in z.B. zwei Bereitstellungszonen 12-1 und 12-2 bereitgestellt sind. Die Entnahme eines oder mehrerer Gebinde 42 von einer der Paletten 44 und die Abgabe auf einen der Transferplätze 46 stellt eine Transferaktion dar, die in Form eines Pfeils 48 verdeutlicht ist. Die FTF 20 und die Transferplätze 46 sind z.B. so ausgebildet, wie in der Patentanmeldung "Fahrerloses Transportsystem in einer Lager- und Kommissionieranlage" (DE 10 2015 114 370.4) beschrieben, die von der Anmelderin der vorliegenden Anmeldung am gleichen Tag wie die vorliegende Anmeldung eingereicht wurde. In diesem Fall bewegen sich die FTF 20 entlang von Fahrwegen 50, mit denen beliebige (feste) Streckenabläufe abbildbar sind. Die Fahrwege 50 können z.B. auf einen Hallenboden streifenförmig aufgeklebt sein. Die FTF 20 bewegen sich entlang der Fahrwege 50, wie es exemplarisch für das FTF 20-1 durch einen Pfeil 52 angedeutet ist. Das FTF 20-1 ist mit einem (oder mehreren Gebinden 42) beladen und transportiert das bzw. die entnommenen Gebinde 42 zur Konsolidierungsstation 24, zur Packstation 26 und/oder zum Versand 28 (jeweils nicht dargestellt).

Die Transferplätze 46 sind in der Kommissionierzone 14 angeordnet. In der Fig. 2 sind die Transferplätze 46 exemplarisch in zwei, vorzugsweise kontinuierlich ausgebildeten, Reihen 52-1 und 52-2 angeordnet. Es versteht sich, dass die Transferplätze 46 auch diskontinuierlich angeordnet sein können. Die Reihen 52-1 und 52-2 sind exemplarisch in einer Querrichtung Z des Systems 10 beabstandet zueinander angeordnet und definieren eine Gasse zwischen sich, die die FTF 20 zum Abtransport der entnommenen Gebinde 42 nutzen können. Die FTF bewegen sich innerhalb dieser Gasse vorzugsweise unidirektional. Im Beispiel der Fig. 2 bewegen sich die FTF 20 von oben nach unten, wie es durch den Pfeil 52 angedeutet ist (Einbahnstraßenregelung). Unbeladene FTF 20, wie z.B. das FTF 20-2 können sich in einem Bereich, der gemeinsam mit den Manipulatoren 40 genutzt wird, vorzugsweise ebenfalls gemäß einer Einbahnstraßenregelung, zu den Transferplätzen 46 hin bewegen, wie es exemplarisch durch einen Pfeil 53 angedeutet ist.

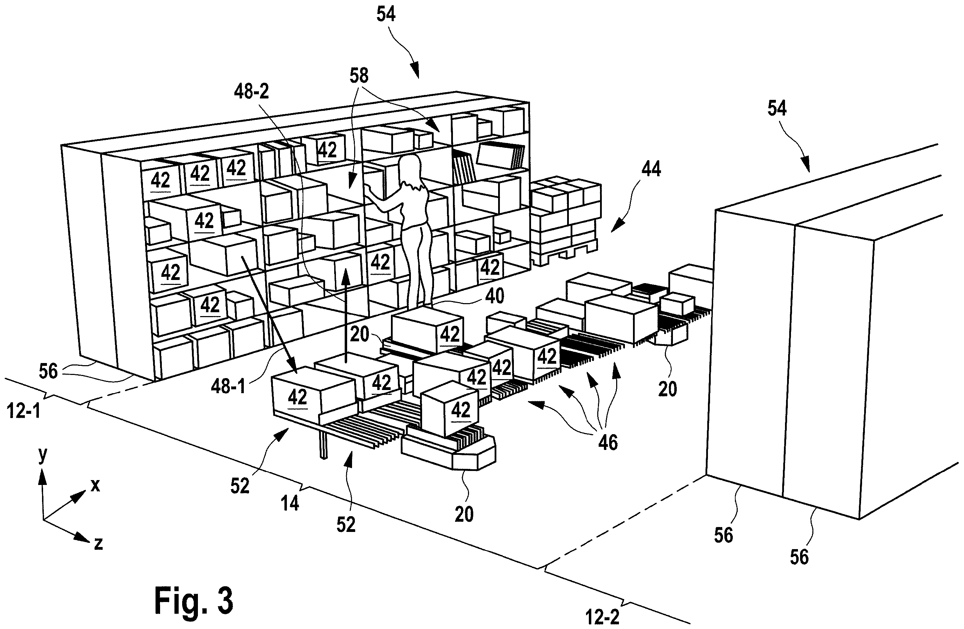

Fig. 3 zeigt ebenfalls eine Case-Picking-Anwendung. In der Fig. 3 sind die Transferplätze 46 mittig in der Kommissionierzone 14 zwischen zwei Bereitstellungszonen 12-1 und 12-2 angeordnet. In den Bereitstellungszonen 12-1 und 12-2 sind Regalanordnungen 54 vorgesehen. Die Regalanordnungen 54 können aus ein oder mehreren Regalen 56 gebildet sein. Der (menschliche) Manipulator 40 entnimmt Gebinde 42 aus Regalfächern 58 (Quellen) beim Kommissionieren und stellt sie auf einen freien bzw. zugeordneten Transferplatz 46 ab, den der Manipulator 40 entweder vorab übermittelt bekommt oder selbsttätig aussucht und anschließend an die Steuerung 32 übermittelt. Die Kommissionierung ist exemplarisch durch eine Transferaktion 48-1 in der Fig. 3 angezeigt. Ein Einlagerungsvorgang ist exemplarisch durch eine weitere Transferaktion 48-2 verdeutlicht. Bei einer Einlagerung ist ein Gebinde 42, welches z.B. aus dem Wareneingang 16 stammt und auf einem der Transferplätze 46 abgestellt wurde, in ein vorgegebenes (leeres) Regalfach 58 (Zielstelle) abgegeben durch den Manipulator 40. Der Transport der Gebinde 42 von und zu den Transferplätzen 46 erfolgt wiederum mit den FTF 20, die im Beispiel der Fig. 3 aber selbsttätig navigierend ausgebildet sind, so dass auf die zwangsgeführten Fahrwege 50 (vgl. Fig. 2) verzichtet werden kann. Die Transferplätze 46 sind wiederum in Form von Reihen 52 angeordnet, die sich kontinuierlich entlang der Regale 56 erstrecken, um möglichst viele Transferplätze 46 bereitzustellen. Jedoch können die Reihen 52 in der Querrichtung Z ohne Abstand angeordnet sein. Wenn die Transferplätze 46 und die FTF 20 gemäß der oben genannten, parallelen Anmeldung (DE 10 2015 114 370.4) ausgebildet sind, entscheidet die Fahrrichtung der FTF 20 durch die Transferplätze 46 hindurch darüber, ob ein Gebinde 42 abgegeben oder aufgenommen wird. Die FTF 20 sind vorzugsweise aus beiden Z-Richtungen durch die Transferplätze 46 verfahrbar. Die Fig. 3 zeigt in diesem Sinne "Doppel-Transferplätze". Während der eine Transferplatz 46 des Doppel-Transferplatzes beladen wird, wird der andere Transferplatz 46 dieses Doppel-Transferplatzes vom gleichen FTF 20 entladen, bei fortgesetzter Fahrt.

Ferner versteht es sich, dass eine Form der Bereitstellung der Gebinde 42 in den Bereitstellungszonen 12 beliebig ist. Deshalb ist in der Fig. 3 zusätzlich exemplarisch eine Palette 44 gezeigt, die entweder als Quelle oder als Zielstelle dienen kann.

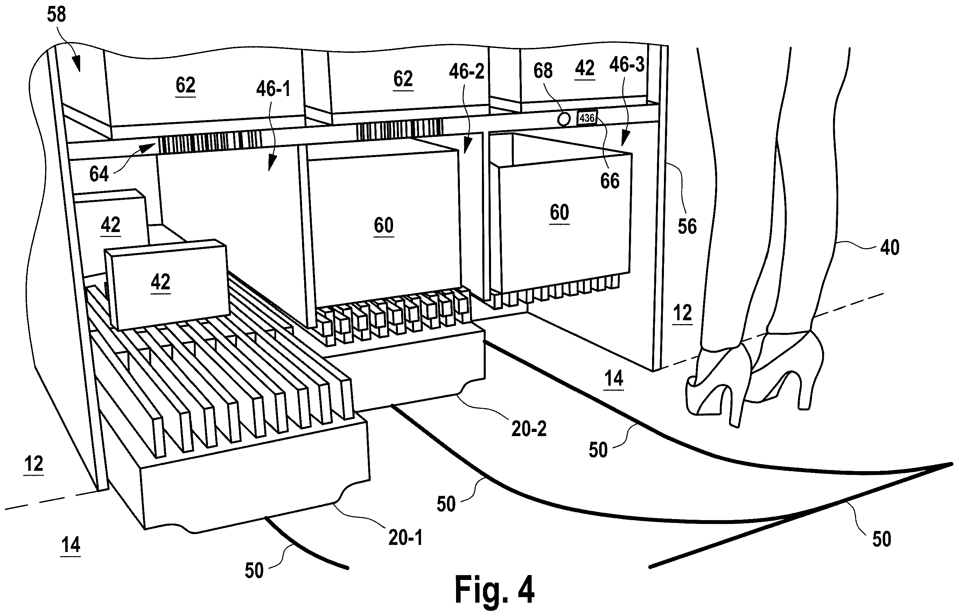

Fig. 4 zeigt eine weitere (vergrößerte) perspektivische Darstellung einer Anwendung, bei der gleichzeitig sowohl Piece-Picking als auch Case-Picking betrieben wird. Es versteht sich, dass Piece-Picking auch allein betrieben werden könnte. Beim Piece-Picking werden die Stückgüter (hier nicht näher dargestellt) in Auftragsbehälter 60 (Zielstellen) gegeben, die zuvor aus Lagerbehältern 62 (Quellen) entnommen wurden. Die Transferplätze 46 sind hier exemplarisch in eine z.B. unterste Ebene eines Regals 56 integriert worden. Die Kommissionierzone 14 erstreckt sich in diesem Sinne überlappend in die Bereitstellungszone 12, wo das Regal 56 angeordnet ist, hinein. Die Transferplätze 46 und/oder die Regalfächer 58 können generell mit Identifizierungen (z.B. Strichcodes 64, Nummern 66 oder Ähnlichem) versehen sein, um die Transferplätze 46 und/oder die Regalfächer 58, die Quellen bzw. Zielstellen repräsentieren, eindeutig zu identifizieren. Ferner können Kommissionierleitelemente, wie z.B. Lampen 68 oder Ähnliches exemplarisch vorgesehen sein.

Die Transferplätze 46-1 bis 46-3 der Fig. 4 sind exemplarisch einfach tief ausgebildet. Die FTF 20 fahren vorwärts in die Transferplätze 46 ein und rückwärts aus den Transferplätzen 46 aus. Deshalb ist es erforderlich, eine aktive Hubeinrichtung für jeden der Transferplätze 46 vorzusehen, um die miteinander kämmenden Elemente der FTF 20 und der Transferplätze 46 zur Abgabe und Aufnahme der zu transferierenden Waren zu befähigen. Hier ist z.B. das FTF 20 mit einem Hub versehen. Das Lastaufnahmemittel des FTF 20-2 ist im Transferplatz 46-2 in einem angehobenen Zustand gezeigt, wohingegen das Lastaufnahmemittel des FTF 20-1 im Transferplatz 46-1 in einem abgesenkten Zustand gezeigt ist.

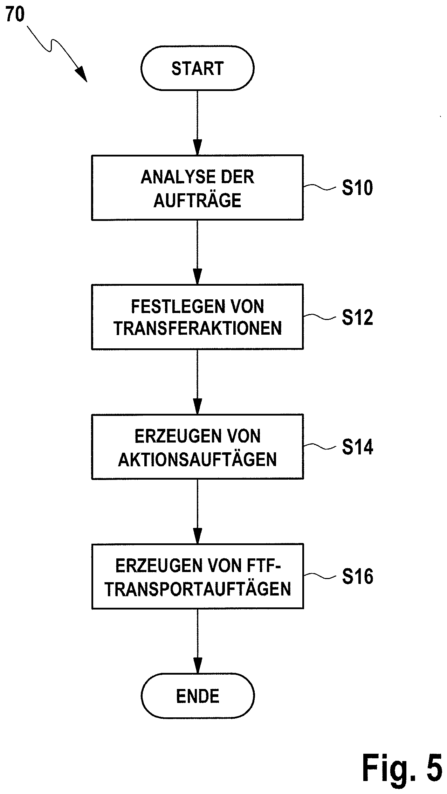

Unter gleichzeitiger Bezugnahme auf die Figuren 5 bis 7 wird nachfolgend ein Verfahren 70 zum Betreiben des Systems 10 unter Verwendung der Steuerung 32 näher beschrieben werden.

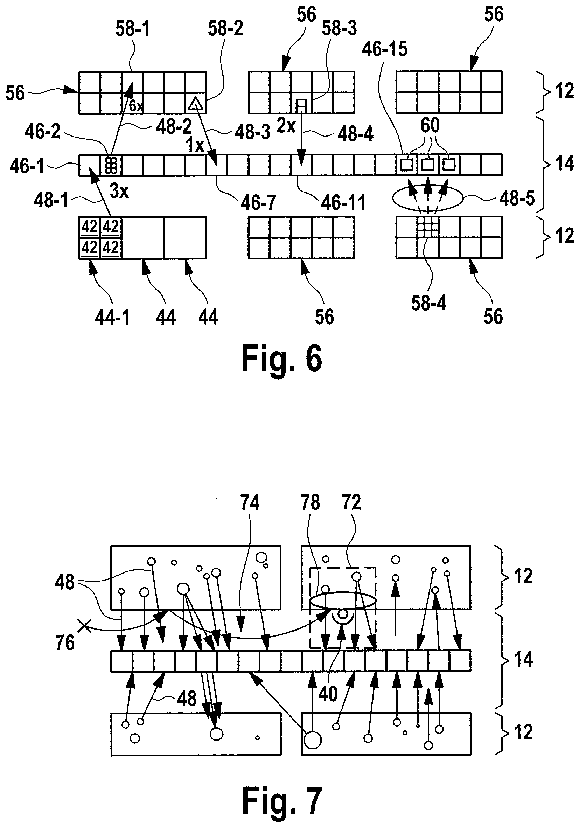

Fig. 5 zeigt ein Flussdiagramm des Verfahrens 70. Das Verfahren 70 weist im Wesentlichen die Schritte S10 bis S16 auf. Im Schritt S10 werden die Kommissionieraufträge 38 bzw. Einlageraufträge analysiert. Basierend auf dieser Analyse werden in einem Schritt S12 die Transferaktionen 48 festgelegt bzw. ausgewertet und verteilt. Sobald Transferaktionen 48 festgelegt sind, werden Aktionsaufträge für jeden der Manipulatoren 40 erzeugt. Ein Aktionsauftrag zeichnet sich durch eine Auswahl von Transferaktionen 48 und einen Bewegungsweg des jeweiligen Manipulators 40 durch die Kommissionierzone 14 aus. In einem Schritt S16 werden Transportaufträge für die FTF 20 erzeugt, so dass jeder der Manipulatoren 40 während einer Durchführung seines Aktionsauftrags seine Transferaktionen innerhalb einer Aktionszone 72 (vgl. Fig. 7), vorzugsweise unterbrechungsfrei, ausführen kann. Die Aktionszone 72 stellt einen Raum dar, innerhalb dem sich der Manipulator 40 bewegt, wenn er von einem Entnahme-/Abgabe-Ort (Quelle) zum nächsten Entnahme-/Abgabe-Ort (nächste Quelle) wandert. Der Bewegungsweg 74 des Manipulators 40 der Fig. 7 beginnt in einem Startpunkt 76 und endet z.B. am zweiten Entnahme-/Abgabe-Ort in der Kommissionierzone 14. Anschließend kann der Manipulator 40 einen neuen Aktionsauftrag übernehmen, indem der Manipulator 40 entweder zum Startpunkt 76 zurückkehrt oder von seinem aktuellen Standpunkt einen neuen Aktionsauftrag beginnt. Auch ist es möglich, dass der Manipulator 40 sich ein kurzes Stück zurückbewegt, um den neuen Aktionsauftrag zu beginnen oder durchzuführen. Vorzugsweise bewegt sich der Manipulator 40 jedoch nur in einer Richtung, d.h. unidirektional, durch die Kommissionierzone 14. Dabei kann es von Vorteil sein, wenn sich der Manipulator 40 wiederkehrend durch die gesamte Kommissionierzone 14 bewegt. Es versteht sich, dass der Manipulator 40, sobald er an einem Ende der Kommissionierzone 14 angekommen ist, seine (unidirektionale) Bewegung umkehren kann, um an das gegenüberliegende Ende der Kommissionierzone 14 zu gelangen. Selbstverständlich ist es auch möglich, dass der Manipulator 40 zum Startpunkt 76 zurückkehrt und somit die Kommissionierzone 14 immer nur in einer einzigen Richtung durchläuft.

Die Fig. 6 zeigt eine Draufsicht auf ein schematisch dargestelltes System 10 und dient der Veranschaulichung eines exemplarischen Aktionsauftrags für einen (einzigen) der Manipulatoren 40. Jeder der Aktionsaufträge setzt sich aus einer Vielzahl von Transferaktionen 48 zusammen. Bei einer ersten Transferaktion 48-1 muss der Manipulator 40 (nicht dargestellt) drei Gebinde 42 z.B. von einer Palette 44-1 entnehmen und an einen ersten Transferplatz 46-1 abgeben. Eine zweite Transferaktion 48-2 repräsentiert einen Einlager-Auftrag, gemäß dem sechs Stückgüter, die auf einem Transferplatz 46-2 bereitgestellt sind, in ein Regalfach 58-1 einzulagern sind. Bei einer dritten Transferaktion 48-3 ist ein Stückgut aus dem Regalfach 58-2 zu entnehmen und an den Transferplatz 46-7 abzugeben. Gemäß einer vierten Transferaktion 48-4 sind zwei Stückgüter aus einem Regalfach 58-3 an einen Transferplatz 46-11 abzugeben. Eine fünfte Transferaktion 48-5 soll veranschaulichen, dass der Manipulator 40 beim Kommissionieren ggf. aus mehreren Transferplätzen 46 auswählen kann, um selbst eine Zielstelle festzulegen. Die Transferaktion 48-5 definiert lediglich den Entnahmeort, nämlich das Regalfach 58-4 sowie eine zu entnehmende Menge, z.B. ein Stück. Da der der Transferaktion 48-5 zugrundeliegende Kommissionierauftrag 38 z.B. allein aus diesem einen Stück besteht und weil in unmittelbarer Nähe des Regalfachs 58-4 drei leere Auftragsbehälter 60 (Zielstellen) auf den Transferplätzen 46-15 bis 46-17 vorhanden sind, die innerhalb der entsprechenden Aktionszone 72 liegen, kann der Manipulator 40 einen dieser Auftragsbehälter 60 auswählen, den die FTF 20 anschließend zu einem zugehörigen Bestimmungsort (Konsolidierungsstation, Packstation oder Versand) bringen. Die FTF 20, die in der Fig. 6 nicht gezeigt sind, können situativ auf Aktionen des Manipulators 40 reagieren, in dem die Steuerung 32 entsprechende Transportaufträge erzeugt. Dies bedeutet, dass es nicht zwingend erforderlich ist, dass die Steuerung 32 alle Transportaufträge für die FTF 20 vorab bestimmt, d.h. bevor der Manipulator 40 seinen Weg durch die Kommissionierzone 14 beginnt. Auch ist es nicht erforderlich, dass alle Transferplätze 46 zu Beginn der Durchführung eines Aktionsauftrags bereits für die jeweilige Transferaktion 48 vorbereitet sind. Die Steuerung 32 muss sich lediglich darum kümmern, dass die Transferplätze 46 innerhalb der Aktionszone 72 und ggf. einige der stromabwärts dazu gelegenen Transferplätze 46 entsprechend vorbereitet sind. Die Transferplätze 46 sind vorbereitet, wenn sie z.B. leergeräumt sind, mit einem leeren Auftragsbehälter 60 bestückt sind, mit einem vorkommissionierten Auftragsbehälter 60 bestückt sind oder mit einem Lagerbehälter 62 bzw. einer Ware für eine Einlagerung bestückt sind. Es versteht sich, dass die Kommissionierung und die Einlagerung gleichzeitig, d.h. innerhalb eines Aktionsauftrags, erfolgen können. Alternativ könnten Kommissionierungsprozesse und Einlagerungsprozesse unterschiedlichen Manipulatoren 40 zugewiesen werden, so dass jeder der Manipulatoren 40 entweder (nur) kommissioniert oder (nur) einlagert. Dies kann von einer Aktionsdichte 78 (Anzahl von Transferaktionen pro Einheitslänge) abhängen, wie es unter Bezugnahme auf Fig. 7 erläutert werden wird.

Fig. 7 dient einer Veranschaulichung einer (möglichen) generellen Verteilung-/ Zuordnung von allen Transferaktionen 48. Bei der Analyse des Schritt S12 der Fig. 5 werden insbesondere die Quellen (Kommissionierung) bzw. Zielstellen (Einlagerung) in der oder den Bereitstellungszonen 12 bestimmt. Die Quellen und Zielstellen in den Bereitstellungszonen 12 der Fig. 7 sind durch unterschiedlich große Punkte verdeutlicht. Je größer ein Punkt ist, desto mehr Waren müssen transferiert werden. Jeder Punkt stellt einen Ort in der Bereitstellungszone 12 dar, von wo aus Waren entnommen werden oder wohin Waren gegeben werden. Jeder dieser Punkte in Fig. 7 stellt also einen Entnahme- oder Abgabe-Ort dar. Jeder der Entnahme-/Abgabe-Orte legt wiederum eine entsprechende Transferaktion 48 fest. Eine Richtung der Pfeile, die die Transferaktionen 48 in der Fig. 7 verdeutlichen, ist möglicherweise noch nicht zwingend im Schritt S12 festgelegt (siehe Transferaktion 48-5 in Fig. 6). Dennoch kann eine Aktionsdichte 78 bestimmt werden. In der Fig. 7 ist die Aktionsdichte 78 durch einen kreisförmigen Bereich innerhalb der Aktionszone 72 veranschaulicht. Dieser Bereich umfasst exemplarisch drei Transferaktionen 48, die der Manipulator 40 innerhalb der Aktionszone 72 durchführen kann bzw. muss.

Zum Zwecke einer Arbeitslastoptimierung werden nun für jeden der Manipulatoren 40, die zahlreich vorhanden sind, Transferaktionen 48 derart ausgewählt, dass jeder der Manipulatoren 40 (im Mittel) vorzugsweise gleich stark belastet ist. Die Arbeitsbelastung kann z.B. durch die Anzahl der Transferaktionen 48 pro Laufmeter des Manipulators 40 entlang der Kommissionierzone 14 gemessen werden. Jeder der Manipulatoren 40 bekommt also eine Untermenge der Transferaktionen 48 zugewiesen. Die FTF 20 wiederum sorgen dafür, dass ausgewählte oder potentielle Transferplätze 46 rechtzeitig für die Durchführung eines jeweiligen Aktionsauftrags vorbereitet sind. Die entsprechenden Transportaufträge für die FTF können also in Abhängigkeit vom jeweiligen aktuellen Standort des jeweiligen Manipulators 40 durch die Steuerung 32 berechnet werden.

**BEZUGSZEICHENLISTE**

| | | | |
|---|---|---|---|
| 10 | Lager- und Kommissioniersystem | 70 | Verfahren |
| 12 | Bereitstellungszone | 72 | Aktionszone |
| 14 | Kommissionierzone | 74 | Bewegungsweg |
| 16 | Wareneingang (WE) | 76 | Startpunkt |
| 18 | Fahrerloses Transport-System/FTS | 78 | Aktionsdichte |
| 20 | Fahrerlose Transport-Fahrzeuge/FTF | | |
| 22 | Materialfluss (Warenfluss) | | |
| 24 | Konsolidierungsstation | | |
| 26 | Packstationen | | |
| 28 | Versand/Warenausgang (WA) | | |
| 30 | Kunde | | |
| 32 | Steuerung | | |
| 34 | Leitungen | | |
| 36 | drahtlose Verbindung | | |
| 38 | (Kommissionier-)Aufträge | | |
| 40 | Manipulator | | |
| 42 | Gebinde | | |
| 44 | Paletten | | |
| 46 | Transferplatz | | |
| 48 | Transferaktion | | |
| 50 | Fahrwege | | |
| 51, 53 | Transportrichtung | | |
| 52 | Reihen von TP46 | | |
| 54 | Regalanordnung | | |
| 56 | Regal | | |
| 58 | Regalfach | | |
| 60 | Auftragsbehälter | | |
| 62 | Lagerbehälter | | |
| 64 | Strichcode | | |
| 66 | Nummer | | |

**BEZUGSZEICHENLISTE**

| | | | |
|---|---|---|---|
| 10 | Lager- und Kommissioniersystem | 70 | Verfahren |
| 12 | Bereitstellungszone | 72 | Aktionszone |
| 14 | Kommissionierzone | 74 | Bewegungsweg |
| 16 | Wareingang (WE) | 76 | Startpunkt |
| 18 | Fahrerloses Transport-System/FTS | 78 | Aktionsdichte |
| 20 | Fahrerlose Transport-Fahrzeuge/FTF | | |
| 22 | Materialfluss (Warenfluss) | | |
| 24 | Konsolidierungsstation | | |
| 26 | Packstationen | | |
| 28 | Versand/Warenausgang (WA) | | |
| 30 | Kunde | | |
| 32 | Steuerung | | |
| 34 | Leitungen | | |
| 36 | drahtlose Verbindung | | |
| 38 | (Kommissionier-)Aufträge | | |
| 40 | Manipulator | | |
| 42 | Gebinde | | |
| 44 | Paletten | | |
| 46 | Transferplatz | | |
| 48 | Transferaktion | | |
| 50 | Fahrwege | | |
| 51, 53 | Transportrichtung | | |
| 52 | Reihen von TP46 | | |
| 54 | Regalanordnung | | |
| 56 | Regal | | |
| 58 | Regalfach | | |
| 60 | Auftragsbehälter | | |
| 62 | Lagerbehälter | | |
| 64 | Strichcode | | |
| 66 | Nummer | | |
| 68 | Lampe | | |

## Patentansprüche

1. Verfahren (70) zum Betreiben eines Lager- und Kommissioniersystems (10), in welchem eine Vielzahl von Manipulatoren (40) eine Vielzahl von Kommissionier/Einlager-Aufträgen nach einem Manipulator-zur-Handhabungseinheit-Prinzip abarbeitet, das nach dem "Mann-zur-Ware"-Prinzip arbeitet, wobei Menschen und/ oder Maschinen eingesetzt werden, wobei das System (10) eine Bereitstellungzone (12), eine an die Bereitsstellungszone (12) angrenzende Kommissionierzone (14), eine Vielzahl von Bereitstellungeinheiten (42, 62) in der Bereitstellungszone, eine Vielzahl von stationär angeordneten Transferplätzen (46) in der Kommissionierzone (14), ein FTS (18) mit einer Vielzahl von FTF (20) und eine Steuerung (32) aufweist, wobei die Transferplätze (46) jeweils ein Gestell aufweisen, auf dem Handhabungseinheiten zur Abholung oder Andienung durch die FTF (20) abgelegt werden und wobei das Verfahren (70) die folgenden Schritte aufweist:
Analysieren (S10) der Vielzahl von Kommissionier/Einlager-Aufträgen durch die Steuerung (32) zwecks Bestimmung von Entnahme/Abgabe-Orten in der Bereitstellungszone (12);
Festlegen (S12) von Transferaktionen (48), indem für jeden der Entnahme/Abgabe-Orte zumindest einer der Transferplätze (46) in der Kommissionierzone (14) als Abgabe/Entnahme-Ort in der Kommissionierzone (14) ausgewählt und diesem Entnahme/Abgabe-Orte in der Bereitsstellungszone (12) zugeordnet wird, wobei der Abgabe/Entnahme-Ort innerhalb einer Aktionszone (72) liegt, die sich um den jeweiligen Entnahme/Abgabe-Ort in der Bereitstellungszone (12) erstreckt und die sich dynamisch mit dem jeweiligen Manipulator (40) bewegt, und wobei jede der Transferaktionen (48) ferner eine Anzahl und einen Typen der Handhabungseinheiten definiert, die durch den jeweiligen Manipulator (40) zwischen den einander zugeordneten Orten zu transferieren ist;
Erzeugen (S14) eines Aktionsauftrags für jeden der Manipulatoren (40), indem:
einige der Transferaktionen (48) ausgewählt werden; und
ein, insbesondere unidirektionaler, Bewegungsweg (74) festgelegt wird, entlang dem sich der jeweilige Manipulator (40) zwischen den ausgewählten Entnahme/Abgabe-Orten in der Bereitstellungszone (12) durch die, vorzugsweise gesamte, Kommissionierzone (14) bewegt;
und Erzeugen (S16) von Transportaufträgen für die FTF (20), so dass jeder der Manipulatoren (40) während einer Durchführung seines Aktionsauftrags seine Transferaktionen (48) innerhalb seiner Aktionszone (72), vorzugsweise unterbrechungsfrei, ausführen kann, indem die FTF (20) die entsprechenden, ausgewählten Transferplätze (46) innerhalb der Aktionszone (72) und/oder stromabwärts dazu rechtzeitig für den Transfer der Handhabungseinheiten vorbereiten.

2. Verfahren nach Anspruch 1, wobei die Erzeugung (S14) der Aktionsaufträge arbeitslastoptimiert erfolgt, indem die entsprechenden Transferaktionen (48) derart ausgewählt werden, dass eine Aktionsdichte (78) an eine Arbeitslast angeglichen ist, wobei die Arbeitslast eine vorgegebene Anzahl von Transferaktionen (48) pro Komissionierzonen-Einheitslänge darstellt und wobei die Aktionsdichte (78) eine manipulatorspezifische ortsabhängige Anzahl der ausgewählten Transferaktionen (48) pro Kommissionierzonen-Einheitslänge darstellt.

3. Verfahren nach einem der Ansprüche 1 bis 2, wobei das Erzeugen (S16) von Transportaufträgen für die FTF (20) derart erfolgt, dass die FTF (20) die entsprechenden Transferplätze (46) innerhalb der Aktionszone (72) und/oder stromabwärts dazu rechtzeitig für die jeweiligen Transferaktionen (48) vorbereiten.

4. Verfahren nach einem der Ansprüche 1 bis 3, wobei jede der Aktionszonen (72) eine einstellbare, vorzugsweise feste, geometrische Abmessung aufweist.

5. Verfahren nach einem der Ansprüche 1 bis 4, wobei eine Gesamtheit aller Transferaktionen (48) der Vielzahl der Kommissionier/Einlager-Aufträge entspricht.

6. Verfahren nach einem der Ansprüche 1 bis 5, wobei eine gemittelte Arbeitslast für jeden der Manipulatoren (40) im Wesentlichen gleich ist.

7. Verfahren nach einem der Ansprüche 1 bis 6, wobei der Schritt des Analysierens (S10) unter Berücksichtigung einer Verteilung der Handhabungseinheiten in der Bereitstellungzone (12) und/oder unter Berücksichtigung einer Struktur der Kommissionier/Einlager-Aufträge zum Zwecke der Erzeugung (S14) der Aktionsaufträge durchgeführt wird.

8. Verfahren nach einem der Ansprüche 1 bis 7, wobei die Erzeugung (S16) der Transportaufträge in Abhängigkeit eines aktuellen Standorts des jeweiligen Manipulators (40) im System (10), vorzugsweise in Echtzeit, erfolgt.

9. Verfahren nach einem der Ansprüche 1 bis 8, wobei jeder der Transferplätze (46) mehrfach, aber zeitlich versetzt, auswählbar ist.

10. Verfahren nach einem der Ansprüche 1 bis 9, wobei die Transportaufträge so erzeugt werden, dass die Handhabungseinheiten sequenziert und/oder sortiert an einem jeweiligen Bestimmungsort (24, 26, 28) ankommen.

11. Verfahren nach einem der Ansprüche 1 bis 10, wobei jedem der FTF (20) und jedem der Transferplätze (46) eine eindeutige Identifizierung (ID) zugewiesen wird, wobei die Steuerung (32) eingerichtet ist, einen Weg von jeder der Handhabungseinheiten durch das System (10) ausschließlich auf Basis der Transportaufträge und von Quittierinformationen zu verfolgen, die die Identifizierungen der Transferplätze (46) und der FTF (20) benutzen.

12. Lager- und Kommissioniersystem (10), in welchem eine Vielzahl von Manipulatoren (40) eine Vielzahl von Kommissionier/Einlager-Aufträgen nach einem Manipulator-zur-Ware-Prinzip abarbeitet, wobei das System (10) aufweist:
eine Bereitstellungzone (12);
eine Kommissionierzone (14), die an die Bereitstellungszone (12) angrenzt und die sich entlang der Bereitstellungszone (12) erstreckt;
eine Vielzahl von Bereitstellungseinheiten (42, 62), die in der Bereitstellungszone (12) nebeneinander und/oder übereinander angeordnet sind, wobei jede der Bereitstellungseinheiten mindestens eine Handhabungseinheit aufweist;
eine Vielzahl von stationär angeordneten Transferplätzen (46), die in der Kommissionierzone (14), vorzugsweise kontinuierlich, entlang der Bereitstellungszone (12) angeordnet sind, und wobei jeder der Transferplätze (46) eingerichtet ist, eine der Handhabungseinheiten aufzunehmen und zu puffern, wobei die Transferplätze (46) jeweils ein Gestell aufweisen, auf dem Handhabungseinheiten zur Abholung oder Andienung durch die FTF (20) abgelegt werden;
ein fahrerloses Transportsystem (18), das eine Vielzahl von fahrerlosen Transportfahrzeugen (20) aufweist, wobei die FTF (20) und die Transferplätze (46) eingerichtet sind, die Handhabungseinheiten, vorzugsweise passiv kämmend bidirektional, miteinander auszutauschen, wobei die FTF (20) autonom verfahrbar sind; und
eine Steuerung (32), die eingerichtet ist:
die Vielzahl der Kommissionier/Einlager-Aufträge zwecks Bestimmung von Entnahme/Abgabe-Orten in der Bereitstellungszone (12) zu analysieren;
Transferaktionen (48) festzulegen, indem für jeden der Entnahme/Abgabe-Orte in der Bereitstellungszone (12) zumindest einer der Transferplätze (46) in der Kommissionierzone (14) als Abgabe/Entnahme-Ort in der Kommissionierzone (14) ausgewählt und diesem Entnahme/Abgabe-Orte in der Bereitstellungszone (12) zugeordnet wird, wobei der Abgabe/Entnahme-Ort innerhalb einer Aktionszone (72) liegt, die sich um den jeweiligen Entnahme/Abgabe-Ort erstreckt und die sich dynamisch mit dem jeweiligen Manipulator (40) bewegt, und wobei jede der Transferaktionen (48) ferner eine Anzahl und einen Typen der Handhabungseinheiten definiert, die durch den jeweiligen Manipulator (40) zwischen den einander zugeordneten Orten zu transferieren ist;
einen, vorzugsweise arbeitslastoptimierten, Aktionsauftrags für jeden der Manipulatoren (40) zu erzeugen, indem:
einige der Transferaktionen (48) ausgewählt werden, vorzugsweise derart, dass eine Aktionsdichte (78) und eine Arbeitslast aneinander angeglichen sind, wobei die Arbeitslast eine gewünschte Anzahl von Transferaktionen (48) pro Komissionierzonen-Einheitslänge darstellt und wobei die Aktionsdichte (78) eine ortsabhängige Anzahl der ausgewählten Transferaktionen (48) pro Kommissionierzonen-Einheitslänge darstellt; und
ein, insbesondere unidirektionaler, Bewegungsweg (74) festgelegt wird, entlang dem sich der jeweilige Manipulator (40) zwischen den ausgewählten Entnahme/Abgabe-Orten in der Bereitstellungszone (12) durch die, vorzugsweise gesamte, Kommissionierzone (14) bewegt;
und Transportaufträgen für die FTF (20) zu erzeugen, so dass jeder der Manipulatoren (40) während einer Durchführung seines Aktionsauftrags seine Transferaktionen (48) innerhalb seiner Aktionszone (72), vorzugsweise unterbrechungsfrei, ausführen kann, indem die FTF (20) die entsprechenden, ausgewählten Transferplätze (46) innerhalb der Aktionszone (72) und/oder stromabwärts dazu rechtzeitig für den Transfer der Handhabungseinheiten vorbereiten.

13. System nach Anspruch 12, wobei die Handhabungseinheiten verfolgungslos mittels der FTF (20) an einen jeweiligen Bestimmungsort gelangen.

14. System nach einem der Ansprüche 12 bis 13, wobei mindestens 50 %, insbesondere 60-70%, einer Gesamtlänge der Bereitstellungszone (12) mit den Transferplätzen (46) versehen ist.

15. System nach einem der Ansprüche 12 bis 14, wobei der Transport der Handhabungseinheiten von und zu den Transferplätzen (46) ausschließlich mittels der FTF (20) erfolgt.

## Claims

1. A method (70) for operating a storage and order-picking system (10) in which a plurality of manipulators (40) processes a plurality of picking/storing orders in accordance with a manipulator-to-handling-unit principle operating in accordance with the "man-to-goods" principle where humans and/or machine are employed, wherein the system (10) comprises a provision zone (12), a picking zone (14) adjacent to the provision zone, a plurality of provision units (42, 62) in the provision zone, a plurality of transfer locations (46) arranged stationary in the picking zone (14), a DTS (18) including a plurality of DTVs (20), and a controlling device (32), wherein the transfer locations (46) respectively comprise a frame on which handling units are deposited for retrieval or delivery by the DTVs (20), and wherein the method (70) comprises the steps of:
analyzing (S10) the plurality of picking/storing orders by means of the controlling device (32) for determining retrieval/delivery locations in the provision zone (12);
setting (S12) transfer actions (48) by selecting for each of the retrieval/delivery locations at least one of the transfer locations (46) in the picking zone (14) as delivery/retrieval location in the pricking zone (14) and by assigning the same to the respective retrieval/delivery locations in the provision zone (12), wherein the delivery/retrieval location is located within an action zone (72) extending around the respective retrieval/delivery location in the provision zone (12) and moving dynamically with the respective manipulator (40), and wherein each of the transfer actions (48) further defines number and type of the handling units which are to be transferred by the respective manipulator (40) between the locations assigned to each other;
generating (S14) an action order for each of the manipulators (40) by:
selecting some of the transfer actions (48); and
setting one, in particular unidirectional, moving path (74) along which the respective manipulator (40) moves between the selected retrieval/delivery locations in the provision zone (12) through the, preferably entire, picking zone (14);
and generating (S16) transport orders for the DTVs (20) so that each of the manipulators (40) can execute, during performance of its action orders, its transfer actions (48) within its action zone (72), in particular uninterruptedly, due to the DTVs (20) preparing the corresponding selected transfer locations (46) within the action zone (72) and/or downstream thereto in time for the transfer of the handling units.

2. The method of claim 1, wherein the generating (S14) of the action orders is performed in a work-load optimized manner by selecting the corresponding transfer actions (48) such that an action density (78) is adjusted to a work load, wherein the work load represents a preset number of transfer actions (48) per picking-zone standard length, and wherein the action density (78) represents a manipulator-specific location-dependent number of the selected transfer actions (48) per picking-zone standard length.

3. The method of one of claims 1 to 2, wherein the generating (S16) of transport orders for the DTV (20) is performed such that the DTVs (20) prepare the corresponding transfer locations (46) within the action zone (72) and/or downstream thereto for the respective transfer actions (48) in time.

4. The method of one of claims 1 to 3, wherein each of the action zones (72) comprises an adjustable geometric dimension, which is preferably fixed.

5. The method of one of claims 1 to 4, wherein an entirety of all transfer actions (48) corresponds to the plurality of picking/storing orders.

6. The method of one of claims 1 to 5, wherein an average work load for each of the manipulators (40) is substantially equal.

7. The method of one of claims 1 to 6, wherein the step of analyzing (S10) is conducted under consideration of a distribution of the handling units in the provision zone (12) and/or under consideration of a structure of the picking/storing orders for the purpose of the generating (S14) of the action orders.

8. The method of one of claims 1 to 7, wherein the generating (S16) of the transport orders occurs dependent on a current location of the respective manipulator (40) within the system (10), preferably in real time.

9. The method of one of claims 1 to 8, wherein each of the transfer locations (46) is selectable multiple times, but in a temporarily shifted manner.

10. The method of one of claims 1 to 9, wherein the transport orders are generated such that the handling units arrive in a sequenced manner and/or in a sorted manner at the respective destination location (24, 26, 28).

11. The method of one of claims 1 to 10, wherein each of the DTVs (20) and each of the transfer locations (46) has assigned an unambiguous identification (ID), wherein the controlling device (32) is configured to track a path of each of the handling units through the system (10) exclusively based on the transport orders and confirmation information using the identifications of the transfer locations (46) and the DTVs (20).

12. A storage and order-picking system (10) in which a plurality of manipulators (40) processes a plurality of picking/storing orders with a manipulator-to-goods-principle, wherein the system (10) comprises:
a provision zone (12);
a picking zone (14) adjacent to the provision zone (12) and extending along the provision zone (12);
a plurality of provision units (42, 62) arranged in the provision zone (12) next to each other and/or on top of each other, wherein each of the provision units comprises at least one handling unit;
a plurality of stationary arranged transfer locations (46) being arranged in the picking zone (14), preferably continuously, along the provision zone (12), and wherein each of the transfer locations (46) is configured to receive and buffer one of the handling units, wherein the transfer locations (46) respectively comprise a frame on which the handling units are deposited for retrieval or delivery by the DTVs (20);
a driverless transport system (18) comprising a plurality of driverless transport vehicles (20), wherein the DTVs (20) and the transfer locations (46) are configured to exchange with each other the handling units, preferably passive and in a bidirectionally meshing manner, wherein the DTVs (20) are movable autonomously; and
a controlling device (32) being configured to:
analyze the plurality of picking/storing orders for determining retrieval/delivery locations in the provision zone (12);
set transfer actions (48) by selecting for each of the retrieval/delivery locations in the provision zone at least one of the transfer locations (46) in the picking zone (14) as delivery/retrieval location in the picking zone (14) and by assigning the same to the respective retrieval/delivery locations in the provision zone (12), wherein the delivery/retrieval location is located within an action zone (72) extending around the respective retrieval/delivery location and moving dynamically with the respective manipulator (40), and wherein each of the transfer actions (48) further defines number and type of the handling units which are to be transferred by the respective manipulator (40) between the locations assigned to each other;
generate, preferably in a work-load optimized manner, action orders for each of the manipulators (40) by:
selecting some of the transfer actions (48), preferably such that an action density (78) and a work load are adjusted to each other, wherein the work load represent a desired number of transfer actions (48) per picking-zone standard length, and wherein the action density (78) represents a location-dependent number of the selected transfer actions (48) per picking-zone standard length; and
set one, in particular unidirectional, moving path (74) along which the respective manipulator (40) moves between the selected retrieval/delivery location in the provision zone (12) through the, preferably entire, picking zone (14);
and generate transport orders for the DTVs (20) so that each of the manipulators (40), during performance of its action order, can perform its transfer actions (48) within its action zone (72), preferably uninterruptedly, due to the DTVs (20) preparing the corresponding selected transfer locations (46) within the action zone (72) and/or downstream thereto in time for the transfer of the handling units.

13. The system of claim 12, wherein the handling units arrive at respective destination location by means of the DTVs (20) without tracking.

14. The system of one of claims 12 to 13, wherein at least 50 %, in particular 60-70%, of an entire length of the provision zone (12) is provided with the transfer locations (46).

15. The system of one of claims 12 to 14, wherein the transport of the handling units from and to the transfer locations (46) is performed exclusively by the DTVs (20).

## Revendications

1. Procédé (70) pour faire fonctionner un système de stockage et de préparation de commandes (10), dans lequel une pluralité de manipulateurs (40) exécutent une pluralité d'ordres de préparation de commande/mise en stock selon un principe manipulateur vers unité de manipulation, qui fonctionne selon le principe « homme vers produit », des personnes et/ou des machines étant employés, le système (10) possédant une zone de mise à disposition (12), une zone de préparation de commandes (14) adjacente à la zone de mise à disposition (12), une pluralité d'unités de mise à disposition (42, 62) dans la zone de mise à disposition, une pluralité de postes de transfert (46) en position fixe dans la zone de préparation de commandes (14), un FTS (18) comprenant une pluralité de FTF (20) et une commande (32), les postes de transfert (46) possédant respectivement un bâti sur lequel sont déposées des unités de manipulation destinées à être collectées ou mises à disposition par les FTF (20) et le procédé (70) comprenant les étapes suivantes :
analyse (S10) de la pluralité d'ordres de préparation de commande/mise en stock par la commande (32) en vue de déterminer des emplacements de prélèvement/remise dans la zone de mise à disposition (12) ;
établissement (S12) d'actions de transfert (48) en sélectionnant, pour chacun des emplacements de prélèvement/remise, au moins l'un des postes de transfert (46) dans la zone de préparation de commandes (14) en tant qu'emplacement de remise/prélèvement dans la zone de préparation de commandes (14) et en l'associant à ces emplacements de prélèvement/remise dans la zone de mise à disposition (12), l'emplacement de remise/prélèvement se trouvant à l'intérieur d'une zone d'action (72) qui s'étend autour de l'emplacement de prélèvement/remise respectif dans la zone de mise à disposition (12) et qui se déplace dynamiquement avec le manipulateur (40) respectif, et chacune des actions de transfert (48) définissant en outre un nombre et un type des unités de manipulation qui sont à transférer par le manipulateur (40) respectif entre les emplacements associés les uns aux autres ;
génération (S14) d'un ordre d'action pour chacun des manipulateurs (40) en :
sélectionnant certaines des actions de transfert (48) ; et
établissant un trajet de déplacement (74), notamment unidirectionnel, le long duquel le manipulateur (40) respectif se déplace entre les emplacements de prélèvement/remise sélectionnés dans la zone de mise à disposition (12) à travers la zone de préparation de commandes (14), de préférence entière ;
et génération (S16) d'ordres de transport pour les FTF (20), de sorte que chacun des manipulateurs (40) puisse exécuter ses actions de transfert (48) à l'intérieur de sa zone d'action (72), de préférence sans interruption, pendant l'accomplissement de son ordre d'action, en ce que les FTF (20) préparent les postes de transfert (46) sélectionnés correspondants à l'intérieur de la zone d'action (72) et/ou en aval de celle-ci en temps voulu pour le transfert des unités de manipulation.

2. Procédé selon la revendication 1, la génération (S14) des ordres d'action s'effectuant de manière optimisée en fonction de la charge de travail en sélectionnant les actions de transfert (48) correspondantes de telle sorte qu'une densité d'action (78) est alignée sur une charge de travail, la charge de travail représentant un nombre prédéfini d'actions de transfert (48) par longueur unitaire de zones de préparation de commandes et la densité d'action (78) représentant un nombre, spécifique au manipulateur et dépendant de l'emplacement, des actions de transfert (48) sélectionnées par longueur unitaire de zones de préparation de commandes.

3. Procédé selon l'une des revendications 1 et 2, la génération (S16) d'ordres de transport pour les FTF (20) s'effectuant de telle sorte que les FTF (20) préparent les postes de transfert (46) correspondants à l'intérieur de la zone d'action (72) et/ou en aval de celle-ci en temps voulu pour les actions de transfert (48) respectives.

4. Procédé selon l'une des revendications 1 à 3, chacune des zones d'action (72) possédant une dimension géométrique réglable, de préférence fixe.

5. Procédé selon l'une des revendications 1 à 4, un ensemble de toutes les actions de transfert (48) correspondant à la pluralité des ordres de préparation de commande/mise en stock.

6. Procédé selon l'une des revendications 1 à 5, une charge de travail moyenne calculée étant sensiblement identique pour chacun des manipulateurs (40).

7. Procédé selon l'une des revendications 1 à 6, l'étape d'analyse (S10) étant exécutée en tenant compte d'une distribution des unités de manipulation dans la zone de mise à disposition (12) et/ou en tenant compte d'une structure des ordres de préparation de commande/mise en stock à des fins de génération (S14) des ordres d'action.

8. Procédé selon l'une des revendications 1 à 7, la génération (S16) des ordres de transport s'effectuant en fonction d'un emplacement actuel du manipulateur (40) respectif dans le système (10), de préférence en temps réel.

9. Procédé selon l'une des revendications 1 à 8, chacun des postes de transfert (46) pouvant être sélectionné plusieurs fois, mais avec un décalage dans le temps.

10. Procédé selon l'une des revendications 1 à 9, les ordres de transport étant générés de telle sorte que les unités de manipulation arrivent de manière séquencée et/ou triée à un emplacement de détermination (24, 26, 28) respectif.

11. Procédé selon l'une des revendications 1 à 10, une identification (ID) univoque étant associée à chacun des FTF (20) et à chacun des postes de transfert (46), la commande (32) étant conçue pour suivre un trajet de chacune des unités de manipulation à travers le système (10) exclusivement sur la base des ordres de transport et des informations d'acquittement qui utilisent les identifications des postes de transfert (46) et des FTF (20).

12. Système de stockage et de préparation de commandes (10) dans lequel une pluralité de manipulateurs (40) exécutent une pluralité d'ordres de préparation de commande/mise en stock selon un principe manipulateur vers produit, le système (10) comprenant :
une zone de mise à disposition (12) ;
une zone de préparation de commandes (14), qui est adjacente à la zone de mise à disposition (12) et qui s'étend le long de la zone de mise à disposition (12) ;
une pluralité d'unités de mise à disposition (42, 62) qui sont disposées les unes à côté des autres et/ou au-dessus des autres dans la zone de mise à disposition (12), chacune des unités de mise à disposition possédant au moins une unité de manipulation ;
une pluralité de postes de transfert (46) en position fixe, qui sont disposés dans la zone de préparation de commandes (14), de préférence en continu, le long de la zone de mise à disposition (12), et chacun des postes de transfert (46) étant conçu pour accueillir l'une des unités de manipulation et la mettre en tampon, les postes de transfert (46) possédant respectivement un bâti sur lequel sont déposées des unités de manipulation destinées à être collectées ou mises à disposition par les FTF (20) ;
un système de transport sans conducteur (18), qui possède une pluralité de véhicules de transport sans conducteur (20), les FTF (20) et les postes de transfert (46) étant conçus pour échanger les unités de manipulation entre eux, de préférence de manière bidirectionnelle avec engrenage passif, les FTF (20) pouvant se déplacer de manière autonome ; et
une commande (32), qui est conçue pour :
analyser la pluralité des ordres de préparation de commande/mise en stock en vue de déterminer des emplacements de prélèvement/remise dans la zone de mise à disposition (12) ;
établir des actions de transfert (48) en sélectionnant, pour chacun des emplacements de prélèvement/remise dans la zone de mise à disposition (12), au moins l'un des postes de transfert (46) dans la zone de préparation de commandes (14) en tant qu'emplacement de remise/prélèvement dans la zone de préparation de commandes (14) et en l'associant à ces emplacements de prélèvement/remise dans la zone de mise à disposition (12), l'emplacement de remise/prélèvement se trouvant à l'intérieur d'une zone d'action (72) qui s'étend autour de l'emplacement de prélèvement/remise respectif et qui se déplace dynamiquement avec le manipulateur (40) respectif, et chacune des actions de transfert (48) définissant en outre un nombre et un type des unités de manipulation qui sont à transférer par le manipulateur (40) respectif entre les emplacements associés les uns aux autres ;
générer un ordre d'action pour chacun des manipulateurs (40), de préférence optimisé en fonction de la charge de travail, en :
sélectionnant certaines des actions de transfert (48), de préférence de telle sorte qu'une densité d'action (78) et une charge de travail sont alignées l'une sur l'autre, la charge de travail représentant un nombre souhaité d'actions de transfert (48) par longueur unitaire de zones de préparation de commandes et la densité d'action (78) représentant un nombre dépendant de l'emplacement des actions de transfert (48) sélectionnées par longueur unitaire de zones de préparation de commandes ; et
établissant un trajet de déplacement (74), notamment unidirectionnel, le long duquel le manipulateur (40) respectif se déplace entre les emplacements de prélèvement/remise sélectionnés dans la zone de mise à disposition (12) à travers la zone de préparation de commandes (14), de préférence entière ;
et générer des ordres de transport pour les FTF (20), de sorte que chacun des manipulateurs (40) puisse exécuter ses actions de transfert (48) à l'intérieur de sa zone d'action (72), de préférence sans interruption, pendant l'accomplissement de son ordre d'action, en ce que les FTF (20) préparent les postes de transfert (46) sélectionnés correspondants à l'intérieur de la zone d'action (72) et/ou en aval de celle-ci en temps voulu pour le transfert des unités de manipulation.

13. Système selon la revendication 12, les unités de manipulation parvenant au niveau d'un emplacement de détermination respectif sans suivi au moyen des FTF (20).

14. Système selon l'une des revendications 12 et 13, au moins 50 %, notamment 60-70 %, d'une longueur totale de la zone de mise à disposition (12) étant pourvue des postes de transfert (46).

15. Système selon l'une des revendications 12 à 14, le transport des unités de manipulation depuis et vers les postes de transfert (46) s'effectuant exclusivement au moyen des FTF (20).
